# EUROPEAN PATENT APPLICATION

(11) **EP 3 881 685 A1**
(43) Date of publication of application: **22.09.2021**
(21) Application number: 19808669.6
(22) Date of filing: 23.01.2019
(51) Int. Cl.: A23L 33/105, A23L 33/10, A23L 21/25, A23L 2/38, A23L 21/00, A23L 19/00, A23L 2/02, A23G 3/48, A23G 3/36, A23K 50/90, A23K 10/30

(54) **CERATONIA SILIQUA FRUIT COMPOSITION AND PREPARATION METHOD THEREFOR AND USE THEREOF**

(30) Priority: 15.11.2018 CN 201811362110; 15.11.2018 CN 201811362117; 15.11.2018 CN 201811362118; 15.11.2018 CN 201811361036; 15.11.2018 CN 201811362114
(71) Applicant: Yolo Consumer Pte. Ltd., Fengtai District Beijing 100070 (CN)
(72) Inventor: GUO, Zhihua, Meihekou Jilin 135000 (CN); XU, Shuanghua, Fengtai District Beijing 100070 (CN)
(74) Representative: Hoffmann Eitle
(86) International application number: PCT/CN2019/072739
(87) International publication number: WO 2020/098154

(57) **Abstract**

The present invention relates to a *Ceratonia siliqua* Linn. fruit composition and preparation method and application thereof. The composition of the present invention comprises *Ceratonia siliqua* Linn. fruit extract as a main raw material in combination with honey and other ingredients, can provide sufficient nutrients, has various effects, is convenient and safe to eat, and has extremely high marketing promotional value.

## Description

### Cross-reference to related applications

The present application claims the priority of Chinese patent application Nos. 201811362110.7, 201811362117.9, 201811362118.3, 201811362114.5 and 201811361036.7, filed on November 15, 2018, respectively, the disclosures of which are incorporated herein by reference in their entirety.

### Technical Field

The present invention relates to the technical fields of health foods and animal feeds, in particular to a *Ceratonia siliqua* Linn. fruit composition and preparation method and use thereof.

### Background Art

With the improvement of living standards and living conditions, more and more people are beginning to care about potential health problems. The following aspects have gradually attracted people's attention:
1. Unbalanced diet and overeating have caused many gastrointestinal problems, such as uneven nutrition intake, insufficient intake of dietary fiber and the like, thereby leading to problems such as constipation and imbalance of intestinal flora.
2. Environmental problems such as air pollution, water pollution, and soil pollution have made people pay attention to detoxification, pollutant excretion, and expelling of heavy metals performed by human body.
3. The problems of the complex living environment, the work pressure, the large population density and the like result in low immunity of body, rapid spread of pathogenic bacteria, and susceptibility of the body to invasion by pathogenic bacteria.
4. With the advancement of science and technology, radioactive pollution around the world is expanding, and radiation causes a series of damages to the body, such as hematopoietic disorders, cataracts, fertility disorders, and even cancer.
5. Oxidation of oxygen free radicals can interfere with the normal function of cells, resulting in damage of genetic factors, and causing various diseases due to damage to the immune system. Among the factors in relation to human sub-health and aging, oxidative damage is the first to bear the brunt, which weakens the body's anti-oxidation ability, thereby causing abnormal metabolism and producing toxic substances to damage other tissues.

There are already some products on the market that focus on such problems. For example, Manuka Honey, Jarrah Honey and other honey products with bactericidal function can effectively kill *Helicobacter pylori.* Although the bactericidal effect of honey products is remarkable, and honey products have even become the choice of many patients suffering from *Helicobacter pylori,* honey products are expensive or the raw materials thereof are rare and hardly attainable.

Although people are aware of the above problems, they still cannot solve these problems conveniently and quickly. Nowadays, most of the related products for relaxing bowel, regulating intestinal flora balance, radiation protection, anti-oxidation, sterilization, expelling heavy metals, and improving immunity and the like are oral soft capsules of drugs or similar drug dosage forms, which have single efficacy or excessively large dosage, and are inconvenient for administration or unsuitable for long-term administration, and most of the products are expensive, which is usually determined by the characteristics of the anti-oxidation raw materials used and the production process. The soft capsule dosage form is more similar to drugs, and the human body's feeling of taking and taking compliance are not ideal.

According to the suggestion of latest Dietary Guidelines for Residents, each person needs to eat 12 different kinds of foods every day to meet their basic nutritional needs. However, in today's society, people's life and work rhythm is speeding up, and the dietary structure is unreasonable, and thus it is difficult to take enough nutrients within one day. The existing nutrient supplement products are generally prepared by adding auxiliary materials to nutrients and then preparing into tablets, and the degree of pleasure when taking the products needs to be improved.

Oxidation of oxygen free radicals can interfere with the normal function of cells, resulting in damage of genetic factors, and causing various diseases due to damage to the immune system. There are two types of antioxidants available today, which are synthetic antioxidants and natural antioxidants, respectively. Synthetic antioxidants are cheap and effective, but they have safety hazards due to toxicity resulted from their accumulation in human organs. Natural antioxidants are relatively safe but expensive, and have the problem of difficult to preserve due to their poor stability.

At present, the sources of antioxidants commonly used in anti-oxidation health care products mainly include vitamins (vitamins E and C), tea (green tea), fruits and vegetables (grape seeds), Chinese herbal medicines (danshen, ginkgo, licorice, and epimedium) and the like. Most antioxidant health care products use vitamin E in combination with antioxidants derived from animals and plants, for example, in the Patent No. 201510218576.X, propolis, lycopene and lutein are used in combination with vitamin E to prepare antioxidant compositions. Existing antioxidant health care products may not be favored by ordinary consumers due to high price of the raw materials or poor effect of absorption or anti-oxidation despite of low price. Therefore, it is urgent to develop an antioxidant, which is natural, low in cost of raw materials, highly effective and stable.

At present, it is urgent to develop a health food that can solve the above health problems and is convenient to eat, safe, and naturally sourced.

As a daily drink, honey has a health-care function, and has the effects of regulating the spleen and stomach, and treating lung dryness cough, constipation due to intestinal dryness, hot eyes, aphtha, ulcers, and rubella pruritus and the like, such that people's demand for honey is getting higher and higher in recent years, and meanwhile, more and more attention is paid to the quality of honey. However, due to the continuous development of mountainous areas, destruction of ecological environment and other factors, the honey source plants as food sources of bees have been seriously damaged, resulting in insufficiency and poor quality of foods for bees, which leads to the decline of bee immunity, weak population of a bee colony, poor production performance, weak body constitution, and many diseases.

Honey and pollen are the most ideal feeds for bees. However, pollen and honey as bee feeds are relatively expensive. Considering the factors such as cost and raw material source, actual beekeeping mostly uses white sugar and protein feeds to substitute for a part of honey and pollen, but still depends on the addition of pollen, which increases the cost of bee feeds. Chinese patent application 201610243136.4 uses pollen, white sugar and soybean powder, supplemented with additives to prepare bee feeds; and Chinese patent application 201711082391.6 uses bee pollen, white sugar, yeast tablets, soybean flour, vitamin E and the like to prepare bee feeds. At present, although the commonly used bee feeds have high contents of sugar and protein, its nutrition is not comprehensive, and cannot meet the needs of bee production and breeding, so that the immunity of bees is reduced, the reproductive capacity is low, and the mortality is high. At present, during the process of bee feeding and product production, the beekeepers need to treat the bee colony with drugs due to the phenomena such as low immunity, weak population of a bee colony and poor production performance of bees, causing antibiotic residues in bee products and problems such as food safety. Therefore, it is urgent to develop a bee feed derived from natural sources, which is balanced in nutrients, simple in composition, capable of improving bee immunologic function, prolonging bee life, promoting rapid and healthy growth and breeding of bees, and promoting production of high quality honey.

### Summary of the Invention

On the basis of a large amount of research on *Ceratonia siliqua* Linn. fruit, the inventors of the present invention find that the *Ceratonia siliqua* Linn. fruit extract has good health care effect, especially after being compounded with the ingredients such as honey, and can be developed into a health food for long-term consumption, which is delicious, effective, and high in cost performance.

Based on the above studies, the present invention provides a *Ceratonia siliqua* Linn. fruit composition, comprising a *Ceratonia siliqua* Linn. fruit extract, and further comprising any group of the following ingredients:
a) honey;
b) cactus extract, honey and Noni Puree;
c) honey, American ginseng extract, and Radix Astragali extract.

Further, the *Ceratonia siliqua* Linn. fruit composition further comprises an auxiliary material which is acceptable in the food field.

Further, the *Ceratonia siliqua* Linn. fruit extract is an aqueous extract of the pericarp of *Ceratonia siliqua* Linn. fruit from which the seeds have been removed; preferably, the sugar degree of the *Ceratonia siliqua* Linn. fruit extract is 65 to 75 degree; and/or, the extraction temperature during preparation of the *Ceratonia siliqua* Linn. fruit extract is 40 to 50°C;

Further preferably, the method for preparing the *Ceratonia siliqua* Linn. fruit extract comprises: drying the pericarp of the *Ceratonia siliqua* Linn. fruit from which the seeds have been removed, crushing to an average particle diameter of 0.5 to 1.0 cm, adding 1.5 to 4 times of water by weight, and extracting at 40 to 50°C; and separating to obtain an extract solution and concentrating.

The present invention is further described in detail in below.

According to a first aspect of the present invention, provided is a health food of *Ceratonia siliqua* Linn. fruit, wherein the raw material is natural, and the health food has the effects of relaxing bowel, regulating intestinal flora balance, radiation protection, anti-oxidation, sterilization, and expelling heavy metals, is produced without high temperature or chemical treatment, and can meet various needs.

Specifically, the health food of *Ceratonia siliqua* Linn. fruit provided by the present invention comprises a *Ceratonia siliqua* Linn. fruit extract and honey.

As a preferred embodiment of the present invention, the functional ingredient of the health food of *Ceratonia siliqua* Linn. fruit is composed of a *Ceratonia siliqua* Linn. fruit extract and honey.

In order to meet the needs of the market, the health food of the present invention may comprise a functional ingredient composed of the *Ceratonia siliqua* Linn. fruit extract and honey, and an auxiliary material which is acceptable in the food field is further added, so as to obtain more forms of products. For example, the health food of the present invention may be beverages, jams, candies, bee products and the like with the mixture of the *Ceratonia siliqua* Linn. fruit extract and honey as functional ingredients.

The raw materials used in the present invention are safe to human body, environmentally friendly, natural and healthy, convenient and easy to obtain, high in yield and low in price. The inventors of the present invention creatively find that the combination of the two ingredients can play a synergistic effect, to better exert the effects of relaxing bowel, regulating intestinal flora balance, radiation protection, anti-oxidation, sterilization, and expelling heavy metals and the like.

In order to improve the synergistic effect of the two ingredients, the mass ratio of the *Ceratonia siliqua* Linn. fruit extract to honey in the health food product of the present invention is (5-120):(50-98), preferably (5-45):(70-98), more preferably (20-30):(80-90).

The present invention also provides a method for preparing the health food.

The health food provided by the present invention can be obtained by directly mixing the *Ceratonia siliqua* Linn. fruit extract and honey. For example, the *Ceratonia siliqua* Linn. fruit extract can be cooled to room temperature, mixed with honey, sterilized and filled into packages. The health food provided by the present invention may also be in other product forms added with an auxiliary material. For example, the *Ceratonia siliqua* Linn. fruit extract is mixed with honey at room temperature, and an auxiliary material which is acceptable in the food field is added therein to be processed into functional beverages, jams, candies and/or meal replacement. The whole process of preparing the health food of the present invention is completed under the regulations of the operation rules and meets the requirements of the quality standard.

The above-mentioned health food provided by the present invention uses *Ceratonia siliqua* Linn. fruit extract as a main raw material in combination with honey, can provide sufficient nutrients, is beneficial for relaxing bowel, regulating intestinal flora balance, radiation protection, anti-oxidation, sterilization, expelling heavy metals, and improving immunity, can solve multiple health problems simultaneously, and is convenient and safe to eat, having an extremely high marketing promotional value.

A second aspect of the present invention is to provide a composition comprising *Ceratonia siliqua* Linn. fruit, which is both delicious and high in cost performance, and is excellent in antioxidant function. The composition of the present invention has good mouthfeel, good sensation, high food compliance, and is excellent in both health care effect and food property, and easy for consumers to accept. The source of the composition is natural, and the composition is produced without chemical treatment, and can meet various needs. The specific technical solutions are as follows:
A *Ceratonia siliqua* Linn. fruit-containing composition, comprising a *Ceratonia siliqua* Linn. fruit extract, a cactus extract, honey and Noni Puree.

As a preferred embodiment of the present invention, the functional ingredients of the *Ceratonia siliqua* Linn. fruit-containing composition are a *Ceratonia siliqua* Linn. fruit extract, a cactus extract, honey, and Noni Puree.

In order to meet the needs of the market, the composition of the present invention can comprise a functional ingredient composed of the *Ceratonia siliqua* Linn. fruit extract, the cactus extract, the honey and the Noni Puree, and various auxiliary materials which are acceptable in the food field are further added so as to obtain more forms of products (such as health foods or functional foods). For example, the composition of the present invention may be beverages, jams, candies, bee products and/or meal replacement with the mixture of the *Ceratonia siliqua* Linn. fruit extract, honey, cactus extract and Noni Puree as functional ingredients.

Generally, the cactus of the present invention is an edible cactus or edible and pharmaceutical cactus, and the specific edible part is the root and/or stem of the cactus.

Further, the cactus of the present invention is preferably *Orchard ficus-indica (Linn.) Mill* (variety from Milpa Alta), which is an ordinary food (raw material) approved by the Ministry of Health in China.

Further, the cactus extract of the present invention is an aqueous extract of the cactus. The aqueous extract is prepared by using cactus as a raw material and water as a solvent, and extracting by a conventional method in the art.

As a preferred embodiment of the present invention, the cactus extract is prepared by a method comprising the following steps: taking the edible parts (including roots and/or stems) of the cactus, removing the thorns, washing, extracting with water as a solvent, concentrating, and spraying. The cactus extract is rich in functional substances such as polysaccharides, superoxide dismutase, rutin, quercetin.

The Noni fruit of the present invention is the fruit of *Morinda citrifolia L.* (the English name is Noni), which belongs to a new food material. The Noni Puree is prepared by the following steps: after-ripening the preferred Noni fruits by storage, washing, beating, removing the peel and seeds, sterilizing, filling and sealing.

Further, the quality requirement for the Noni Puree of the present invention is as follows: the Noni Puree is characterized by a turbid liquid containing pulp; the soluble solids (20°C refractometer method) account for 7.0 to 9.0%; the pH is 3.5 to 4.2; and the water content is 90 to 93%.

Noni Puree is a new resource food approved by the Ministry of Health in China (No. 9, 2010).

All the raw materials selected for the present invention are safe to human body, and environmentally friendly, and they are natural and healthy raw materials. The inventors of present invention creatively find that the above-mentioned *Ceratonia siliqua* Linn. fruit extract, honey, cactus extract, and Noni Puree are mutually compatible, and the combined use thereof significantly improves the anti-oxidation performance and provides synergistic effect in terms of anti-oxidation. The inventors of the present invention unexpectedly find that the composition has an auxiliary effect on reducing blood-glucose and a gastric mucosa protecting function, and is particularly suitable for diabetics. Further, the composition of the present invention has the multiple effects of relaxing bowel, regulating intestinal flora balance, radiation protection, sterilization, expelling heavy metals (lead) and the like.

On the basis of the above, the inventors of the present invention further study the ratio of the above four ingredients, and find that the effect of the obtained composition is remarkably improved, in which the mass ratio of the *Ceratonia siliqua* Linn. fruit extract, cactus extract, honey and Noni Puree is (5-120):(10-60):(5-98):(0.8-8); preferably (10-70):(15-50):(10-50):(1-6); more preferably (50-70):(30-50):(10-30):(4-6); and optimally 70:50:10:6.

The above-mentioned *Ceratonia siliqua* Linn. fruit-containing composition may further contain other raw materials usable in the art, such as vitamin E and grape seeds (extract) as raw materials having antioxidant function, raw materials having other functions, or common food materials or auxiliary materials.

The present invention also provides a method for preparing the above-mentioned *Ceratonia siliqua* Linn. fruit-containing composition.

The *Ceratonia siliqua* Linn. fruit-containing composition provided by the present invention can be obtained by directly mixing the *Ceratonia siliqua* Linn. fruit extract, honey, cactus extract and Noni Puree. For example, the *Ceratonia siliqua* Linn. fruit extract may be cooled to room temperature, mixed with honey, cactus extract and Noni Puree, sterilized and filled in packages. The *Ceratonia siliqua* Linn. fruit-containing composition provided by the present invention may also be in other product forms added with an auxiliary material. For example, the *Ceratonia siliqua* Linn. fruit extract is mixed with honey, cactus extract and Noni Puree at room temperature, and an auxiliary material which is acceptable in the food field is added therein to be processed into beverages, jams, candies, bee products and/or meal replacement and the like. The whole process of preparing the composition of the present invention is completed under the regulations of the operation rules and meets the requirements of the quality standard.

The inventors of the present invention unexpectedly find that the cactus extract can encapsulate the active ingredients such as the antioxidant ingredient in the *Ceratonia siliqua* Linn. fruit extract, and a microencapsulation-like reaction occurs, which is beneficial to protection of the active substances in the *Ceratonia siliqua* Linn. fruit extract from inactivation, thereby prolonging the shelf life. For this purpose, the present invention also provides a method for preparing the above composition, comprising: first mixing the cactus extract with the *Ceratonia siliqua* Linn. fruit extract (a microencapsulation-like reaction occurs), then adding honey and Noni Puree, and mixing well; or further adding an auxiliary material which is acceptable in the food field, mixing well; and making into finished products (beverages, jams, candies, bee products and/or meal replacement, etc.).

Wherein the conditions for the microencapsulation reaction between the cactus extract and the *Ceratonia siliqua* Linn. fruit extract are preferably as follows: first homogenizing at 45°C to 50°C (for example, for about 8 to 10 min), then completely stirring (rotation speed is preferably 8000 to 10000 rpm), and allowing to stand (usually for about 40 min).

The present invention also involves the use of the above composition or functional food in the preparation of a food and a health food having an anti-oxidation function.

The present invention also includes the use of the above composition or functional food in the preparation of a food and a health food having an auxiliary effect on reducing blood-glucose.

The present invention also involves the use of the above composition or functional food in the preparation of a food and a health food having a gastric mucosa protecting function.

The composition provided by the present invention uses *Ceratonia siliqua* Linn. fruit as a main raw material, utilizes different action mechanisms of each ingredient, fully exerts synergistic effect of each ingredient, so that the obtained composition has excellent antioxidant effect as well as auxiliary effect on reducing blood-glucose and gastric mucosa protecting function. Further, the composition of the present invention has the multiple effects of relaxing bowel, regulating intestinal flora balance, radiation protection, sterilization, expelling heavy metals (lead) and the like, can simultaneously solve multiple intestinal health problems, is convenient and safe to eat and has extremely high marketing promotional value.

A third aspect of the present invention is to provide a composition comprising *Ceratonia siliqua* Linn. fruit, which is both delicious and high in cost performance, and has excellent antifatigue and immunity enhancing functions. The composition of the present invention has good mouthfeel, good sensation and high food compliance, and is excellent in both health care effect and food property, and easy for consumers to accept; the source of the composition is natural, and the composition is produced without chemical treatment, and can meet various needs. The specific technical solutions are as follows:
A *Ceratonia siliqua* Linn. fruit-containing composition, comprising a *Ceratonia siliqua* Linn. fruit extract, honey, American ginseng extract, and Radix Astragali extract.

As a preferred embodiment of the present invention, the functional ingredients of the *Ceratonia siliqua* Linn. fruit-containing composition are *Ceratonia siliqua* Linn. fruit extract, honey, American ginseng extract, and Radix Astragali extract.

In order to meet the needs of the market, the composition of the present invention can comprise a functional ingredient composed of the *Ceratonia siliqua* Linn. fruit extract, honey, American ginseng extract and Radix Astragali extract, and various auxiliary materials which are acceptable in the food field are further added so as to obtain more forms of product (such as a health food or a functional food). For example, the composition of the present invention may be beverages, jams, candies, bee products and/or meal replacement, which comprise the mixture of the *Ceratonia siliqua* Linn. fruit extract, honey, American ginseng extract, and Radix Astragali extract as functional ingredients.

Radix Astragali is also known as Huang Qi in Chinese, and Li Shizhen, a famous pharmacologist in ancient China, recited that Radix Astragali is yellow, and is the best of the tonics. With respect to American ginseng, *"Records of Tradition Chinese and Western Medicine in Combination"* recorded that, American ginseng can both tonify Qi and replenish blood, and anyone who should take ginseng but cannot bear the tonification of ginseng can take American ginseng instead. Radix Astragali and ginseng constitute a traditional Chinese medicinal composition with effect of reinforcing vital energy, which is widely used in health foods, with main combined effects of antifatigue and immunity enhancement. Studies have shown that the functions of the products obtained from the same monarch drug and different adjuvants by different preparation methods are not the same. In order to better meet the requirement of the modern population under pressure for relieving physical and mental fatigue, it is necessary to provide health foods with definite efficacy and more significant experience as foods that can be eaten for a long time.

The American ginseng used in the present invention is a perennial herbaceous plant belonging to the genus Panax of Araliaceae, and is also named as Panax quinquefolium (Hua Qi Shen, Yang Shen, and Xi Yang Ren Shen in Chinese), which can enhance central nervous system function, protect cardiovascular system, improve immunity, treat diabetes, tonify the lung and decrease internal heat, and nourish the stomach to improve the production of body fluid.

Further, the American ginseng extract of the present invention refers to an aqueous extract of American ginseng. The aqueous extract is obtained by using American ginseng as a raw material and water as a solvent and extracting by a conventional method in the art. The American ginseng extract is rich in functional substances such as flavonoids, polysaccharides, saponins, amino acids.

The Radix Astragali used in the present invention is preferably a dried root of *Astragalus mongholicus Bunge* or *Astragalus membranaceus* of Leguminosae.

Further, the Radix Astragali extract of the present invention refers to an aqueous extract of Radix Astragali. The aqueous extract is obtained by using Radix Astragali as a raw material and water as a solvent and extracting by a conventional method in the art. The Radix Astragali extract is rich in functional substances such as flavonoids, polysaccharides, saponins, amino acids and the like.

All of the raw materials selected in the present invention are safe to human body, environmentally friendly, natural and healthy, convenient and easy to obtain, high in yield and low in price. The inventors of the present invention creatively find that the above-mentioned *Ceratonia siliqua* Linn. fruit extract, honey, American ginseng extract and Radix Astragali extract are mutually compatible, and the combined use thereof significantly improves the antifatigue and immunity enhancing functions, has the effect of invigorating Qi and nourishing Yin, and has synergistic effect.

In order to improve the synergistic effect of the above four ingredients, the present invention further optimizes the ingredient proportions. Specifically, the *Ceratonia siliqua* Linn. fruit-containing composition comprises, in parts by weight:

| | |
|---|---|
| *Ceratonia siliqua* Linn. fruit extract | 5 to 120 parts by weight; |
| Honey | 5 to 90 parts by weight; |
| American ginseng extract | 5 to 50 parts by weight; |
| Radix Astragali extract | 5 to 50 parts by weight. |

Further, the *Ceratonia siliqua* Linn. fruit-containing composition comprises, in parts by weight:

| | |
|---|---|
| *Ceratonia siliqua* Linn. fruit extract | 10 to 60 parts by weight; |
| Honey | 10 to 60 parts by weight; |
| American ginseng extract | 10 to 30 parts by weight; |
| Radix Astragali extract | 10 to 30 parts. |

Further preferably, the *Ceratonia siliqua* Linn. fruit-containing composition comprises, in parts by weight:

| | |
|---|---|
| *Ceratonia siliqua* Linn. fruit extract | 10 to 35 parts by weight; |
| Honey | 15 to 60 parts by weight; |
| American ginseng extract | 10 to 20 parts by weight; |
| Radix Astragali extract | 10 to 15 parts. |

In the above composition of the present invention, American ginseng is the monarch drug, Radix Astragali is the minister drug, *Ceratonia siliqua* Linn. is the adjuvant drug, and honey is the conductant drug, and they complement each other to achieve the effect of tonifying Qi and nourishing Yin.

The inventors of the present invention make further studies and unexpectedly find that the Radix Astragali extract in the composition can be replaced by an olive extract and/or a grape seed extract to achieve the effects of invigorating Qi and nourishing Yin, as well as reducing internal heat, clearing throat and anti-oxidation. Alternatively, the Radix Astragali extract in the composition can be replaced by cassia seed extract and/or *Tribulus terrestris* extract to achieve the effects of invigorating Qi and nourishing Yin, as well as reducing internal heat and improving eyesight.

Specifically, the present invention further provides a composition, comprising, in parts by weight: 10 to 60 parts of *Ceratonia siliqua* Linn. fruit extract, 10 to 60 parts of honey, 10 to 30 parts of American ginseng extract, further comprising 2 to 30 parts of olive extract and/or 10 to 65 parts of grape seed extract. Further preferably, the composition comprises, in parts by weight: 10 to 40 parts of *Ceratonia siliqua* Linn. fruit extract, 15 to 60 parts of honey, 10 to 20 parts of American ginseng extract, further comprising 5 to 20 parts of olive extract and/or 20 to 30 parts of grape seed extract.

Specifically, the present invention also provides a composition, comprising, in parts by weight: 10 to 60 parts of *Ceratonia siliqua* Linn. fruit extract, 10 to 60 parts of honey, 10 to 30 parts of American ginseng extract, further comprising 2 to 30 parts of cassia seed extract and/or 5 to 25 parts of *Tribulus terrestris* extract. Preferably, the composition comprises in parts by weight: 10 to 40 parts of *Ceratonia siliqua* Linn. fruit extract, 15 to 60 parts of honey, 10 to 20 parts of American ginseng extract, further comprising 5 to 20 parts of cassia seed extract and/or 5 to 15 parts of *Tribulus terrestris* extract.

The olive used in the present invention is *Canarium album* (Lour.) Raeusch. belonging to the family of Buseraceae. The olive fruit, also known as Chinese olive, is a traditional Chinese herbal medicine with the effects such as clearing heat, relieving sore-throat, eliminating phlegm, promoting the secretion of saliva or body fluid, tonifying spleen, detoxifying.

Further, the olive extract of the present invention is an aqueous extract of the olive, which can be extracted from olive fruit and olive leaves. The olive extract is rich in polyphenols, has the effects of anti-oxidation and immunity regulation, and can protect substances from oxidation and resist harm of free radicals to human body.

Specifically, the olive extract is rich in functional substances such as oleuropein and polyphenol.

The grape seed of the present invention refers to seeds of grape. The grape seed extract is an aqueous extract of grape seeds, and is mainly composed of polyphenols such as proanthocyanidins, catechins, epicatechins, gallic acid, and epicatechin gallate.

The cassia seed used in the present invention is a dried mature seed of the leguminous plant Cassia or Cassia tora. *Materia Medica* records "cassia seeds have the effects of improving eyesight, nourishing the liver and kidney, tranquilizing and subduing hyperactivity, nourishing yin, and consolidating basis, and they are beneficial without adverse effect, and incomparable with the drugs that cure the symptoms not the diseases, e.g. dispelling wind by warming and relieving fever by cooling".

Further, the cassia seed extract of the present invention is an aqueous extract of Cassia seed. The aqueous extract is obtained by using Cassia seed as a raw material and water as a solvent, and extracting by a conventional method in the art. The Cassia seed extract is rich in functional substances such as anthraquinones and flavonoids.

Further, the *Tribulus terrestris* according to the present invention is a plant of the genus *Tribulus* of the family Zygophyllaceae, which has the effects of activating blood and dispelling wind, calming liver and relieving depression, improving eyesight and arresting itching, and can be used for the treatment of headache, dizziness, red and tearful eyes, bronchitis, hypertension, skin itching, rubella and other symptoms.

Further, the *Tribulus terrestris* extract of the present invention is an aqueous extract of *Tribulus terrestris.* The aqueous extract is obtained by using *Tribulus terrestris* as a raw material and water as a solvent, and extracting by a conventional method in the art. The *Tribulus terrestris* extract is rich in functional substances such as β-sitosterol, saponins, and flavonoids.

Unless otherwise specified, the Radix Astragali, American ginseng, Cassia seed and *Tribulus terrestris* used in the present invention are in compliance with the Pharmacopoeia regulations.

The present invention also provides a method for preparing the above-mentioned *Ceratonia siliqua* Linn. fruit-containing composition.

The *Ceratonia siliqua* Linn. fruit-containing composition provided by the present invention can be obtained by directly mixing the *Ceratonia siliqua* Linn. fruit extract, honey and various extracts. For example, the *Ceratonia siliqua* Linn. fruit extract can be cooled to room temperature, mixed well with honey and various extracts, sterilized and filled in packages. The *Ceratonia siliqua* Linn. fruit-containing composition provided by the present invention may also be in other product forms added with an auxiliary material. For example, the *Ceratonia siliqua* Linn. fruit extract is mixed well with honey and various extracts at room temperature, and an auxiliary material which is acceptable in the food field is added therein to be processed into products, such as beverages, jams, candies, bee products and/or meal replacement. The whole process of preparing the composition of the present invention is completed under the regulations of the operation rules and meets the requirements of the quality standard.

The present invention also includes the use of the above composition or functional food in the preparation of a food and a health food having anti-fatigue function.

The present invention also includes the use of the above composition or functional food in the preparation of a food and a health food having immunity enhancing function.

The present invention also includes the use of the above composition or functional food in the preparation of a food and a health food having an auxiliary effect on reducing blood glucose.

The present invention also includes the use of the above composition or functional food in the preparation of a food and a health food having a gastric mucosa protecting function.

The composition provided by the present invention uses *Ceratonia siliqua* Linn. fruit as a main raw material, utilizes different action mechanisms of each ingredient, and fully exerts synergistic effect of various ingredients, so that the obtained composition has excellent antifatigue and immunity enhancing effects as well as auxiliary effect on reducing blood glucose and gastric mucosa protecting function. Further, the composition of the present invention has the multiple effects of relaxing bowel, regulating intestinal flora balance, radiation protection, sterilization, expelling heavy metals (lead) and the like, can simultaneously solve multiple health problems, is convenient and safe to eat, and has extremely high marketing promotional value.

A fourth aspect of the present invention is to provide a *Ceratonia siliqua* Linn. fruit composition, comprising the following ingredients, in parts by weight: 60 to 99 parts of *Ceratonia siliqua* Linn. fruit extract, and 1 to 40 parts of cactus extract.

As a preferred embodiment of the present invention, the functional ingredients of the composition are as follows: 60 to 99 parts of *Ceratonia siliqua* Linn. fruit extract, and 1 to 40 parts of cactus extract.

The cactus used in the present invention is Opuntia Milpa Alta belonging to the genus *Opuntia* of the family Cactaceae. The succulent stem of the cactus can be eaten as a vegetable, and the fruit thereof serves as a fresh fruit or used as a natural facial mask. Cactus is not only rich in nutrients, but also has high medicinal value, and it can be processed into a variety of health care products, and can also be used as a high-grade raw material for making cans, beverages and wine. According to the theory of traditional Chinese medicine, the cactus is cold in nature and bitter in taste, and has the effects of detoxifying and relieving pain, removing swelling and discharging pus, and promoting Qi and activating blood.

The raw materials selected for the present invention are all safe to human body, environmentally friendly, natural and healthy, convenient and easy to obtain, high in yield and low in price, and suitable for extensive popularization and application.

The inventor has long been committed to the research of health foods used for anti-oxidation and preventing and treating cardiovascular diseases. In the screening of a large number of plants and their extracts, it has been found that the pericarp of the *Ceratonia siliqua* Linn. fruit has high nutritional value and has health care functions of anti-oxidation and the like. However, although the pericarp of the *Ceratonia siliqua* Linn. fruit has a good antioxidative effect, its antioxidative activity is significantly decreased when exposed to light and oxygen gas environment. The anti-oxidation substance of the pericarp of the *Ceratonia siliqua* Linn. fruit has problems of poor stability and difficult to preserve, which affect the stable performance of its antioxidative activity, and restrict the development and utilization of the *Ceratonia siliqua* Linn. fruit. After massive research, the inventor found that the use of the *Ceratonia siliqua* Linn. fruit in combination with cactus can reduce the sensitivity of the anti-oxidation substance of the pericarp of the *Ceratonia siliqua* Linn. fruit to light, oxygen gas and the like, and thereby greatly improving the stability of the anti-oxidation substance.

Moreover, the main anti-oxidation component of the pericarp of the *Ceratonia siliqua* Linn. fruit is condensed tannin. When *Ceratonia siliqua* Linn. fruit is used in combination with cactus, the antioxidative effective components of the both have synergistic effect, and meanwhile the cactus polysaccharide can protect tannin which is the effective component in the extract of the pericarp of the *Ceratonia siliqua* Linn. fruit, reduce the probability of oxidation of tannin in contact with air, such that the hydroxyl group on tannin can play its function stably, and the stability of the overall antioxidative ability is improved, and thus the overall activity of the composition can be maximized, and the antioxidative activity can be exerted stably and efficiently. Moreover, the composition provided by the present invention can also play the role of supplementing nutrients, lowering blood lipid level and regulating blood glucose.

Furthermore, the inventors find that the antioxidative activity can be further improved by mixing the *Ceratonia siliqua* Linn. fruit extract with the cactus extract at a specific weight ratio.

Preferably, in the composition of the present invention, the contents, in parts by weight, of the *Ceratonia siliqua* Linn. fruit extract and the cactus extract are as follows: 60 to 90 parts of *Ceratonia siliqua* Linn. fruit extract, and 10 to 40 parts of cactus extract; wherein, the weight ratio of the *Ceratonia siliqua* Linn. fruit extract to the cactus extract is preferably 3:1 to 9:1.

More preferably, in the composition of the present invention, the contents, in parts by weight, of the *Ceratonia siliqua* Linn. fruit extract and the cactus extract are as follows: 75 to 90 parts of *Ceratonia siliqua* Linn. fruit extract, and 10 to 25 parts of cactus extract; wherein the weight ratio of the *Ceratonia siliqua* Linn. fruit extract to the cactus extract is preferably 3:1 to 5:1.

Preferably, the *Ceratonia siliqua* Linn. fruit extract and the cactus extract of the present invention are both aqueous extracts; and the *Ceratonia siliqua* Linn. fruit extract is the aqueous extract of the pericarp of the *Ceratonia siliqua* Linn. fruit.

The pericarp of the *Ceratonia siliqua* Linn. fruit of the present invention is a pericarp obtained by removing seeds of the *Ceratonia siliqua* Linn. fruit.

In order to ensure that the functional components are sufficiently extracted, the aqueous extracts of the *Ceratonia siliqua* Linn. and the cactus of the present invention are obtained by using the pericarp of the *Ceratonia siliqua* Linn. or cactus as a raw material and water as a solvent, and extracting under specific extraction conditions that can provide maximum retention of active components. Preferably, the *Ceratonia siliqua* Linn. and the cactus are dried and pulverized before extraction.

Specifically, the *Ceratonia siliqua* Linn. fruit extract is prepared by a method comprising the following steps: mixing the dried and pulverized pericarp of the *Ceratonia siliqua* Linn. fruit with water, extracting at 40°C to 50°C, centrifuging the obtained extract solution, and concentrating to obtain the *Ceratonia siliqua* Linn. fruit extract.

The cactus extract is prepared by a method comprising the following steps: peeling the cactus, drying, pulverizing, mixing with water, ultrasonically extracting at 90°C to 95°C, and concentrating the resulting extract solution to obtain the cactus extract.

Preferably, in the preparation of the cactus extract, the ratio of the cactus to water is 1:10 to 1:16 (mass : volume), the ultrasonic extraction time is 1 h to 3 h, and the extraction is repeated for 1 to 3 times.

Furthermore, the present invention also provides the use of the composition in the preparation of a health food having antioxidative, hypolipidemic, and blood-glucose regulating functions.

The present invention also provides an antioxidative health food, and the active ingredient of the health food is the antioxidative composition provided by the present invention.

The present invention also provides a method for preparing the health food, comprising mixing the *Ceratonia siliqua* Linn. fruit extract with the cactus extract; or further adding an auxiliary material which is acceptable in the food field to obtain the health food.

In order to meet the needs of the market, the health food may comprise an active ingredient composed of the *Ceratonia siliqua* Linn. fruit extract and the cactus, and various auxiliary materials which are acceptable in the food field are further added, so as to obtain more forms of products. For example, the health food of the present invention may be beverages, jams, candies, meal replacement and the like which comprise the mixture of the *Ceratonia siliqua* Linn. fruit extract and the cactus extract as functional ingredients.

The health food provided by the invention can be obtained by directly mixing the *Ceratonia siliqua* Linn. fruit extract and the cactus extract. For example, the *Ceratonia siliqua* Linn. fruit extract can be cooled to room temperature, mixed with the cactus extract, sterilized, and filled in packages;

The health food provided by the present invention may also be in other product forms added with an auxiliary material. For example, the *Ceratonia siliqua* Linn. fruit extract is mixed with cactus at room temperature, and an auxiliary material which is acceptable in the food field is added therein to be processed into functional beverages, jams, candies and/or meal replacement.

The whole process of preparing the health food of the present invention is completed under the regulations of the operation rules and meets the requirements of the quality standard.

The invention has the following beneficial effects that: the composition with antioxidative function provided by the present invention uses *Ceratonia siliqua* Linn. fruit as a main raw material in combination with cactus, can provide sufficient nutrients while exhibiting the effects of regulating blood glucose and reducing blood lipids, can significantly improve the stability of antioxidants, can effectively increase the activity of superoxide dismutase (SOD) in serum to achieve stable and highly efficient antioxidative effect, and is convenient and safe to eat, and has extremely high marketing promotional value.

The fifth aspect of the present invention is to provide a bee feed from natural sources and a preparation method and application thereof.

The bee feed provided by the present invention comprises an extract of the pericarp of *Ceratonia siliqua* Linn. fruit and a cactus extract.

Preferably, the bee feed provided by the present invention is prepared by using an extract of the pericarp of the *Ceratonia siliqua* Linn. fruit and a cactus extract as main ingredients, and adding additives which are acceptable in the field of feeds.

The extract of the pericarp of *Ceratonia siliqua* Linn. fruit and the cactus extract can be obtainded by purchasing commercially available products or by extracting the pericarp of *Ceratonia siliqua* Linn. fruit and cactus as raw materials by a conventional method in the art.

The present invention uses the pericarp of *Ceratonia siliqua* Linn. fruit, which is a seed-free pericarp (pod wall) obtained by removing the seeds.

In the present invention, the succulent stem of the cactus can be eaten as a vegetable, and the fruit thereof serves as a fresh fruit, and can also be used as a natural facial mask. Cactus is not only rich in nutrients, but also has high medicinal value, and it can be processed into a variety of health care products, and can also be used as a high-grade raw material for making cans, beverages and wine.

Preferably, the cactus is Opuntia Milpa Alta belonging to the genus Opuntia of the family Cactaceae.

The raw materials selected for the present invention are all from natural plant sources, environmentally friendly, convenient and easy to obtain, high in yield and low in price.

The traditional feed pollen of bees is the main source of proteins required for bees. Pollen is vital to the lifespan, and the development of pharyngeal glands and ovaries of bees, such that the quality of pollen greatly affects the bee population and product properties. By means of extensive screening and comparative experiments, the inventor searched for a cheaper raw material that can replace pollen as a bee feed, so as to develop an economical and nutritionally comprehensive bee feed. The pericarp of the *Ceratonia siliqua* Linn. fruit is rich in proteins, carbohydrates and fat, has relatively high contents of minerals and soluble fibers, is also rich in polyphenols and nutrients, and has health care functions of resisting oxidation and bacteria and improving immunity. However, due to the poor stability of the active components in the pericarp of the *Ceratonia siliqua* Linn. fruit under light and oxygen gas environment, as a bee feed that requires long-term exposure to light and air for use and preservation, the application effect thereof is poor.

Cactus is rich in amino acids, trace elements and vitamins, contains a variety of active substances such as acidic polysaccharides, flavonoids, alkaloids and organic acids, is nutritious and has anti-inflammatory and antioxidative effects. The inventors of the present invention creatively find that the pericarp of the *Ceratonia siliqua* Linn. fruit can be used in combination with cactus to prepare a bee feed, which can provide the main nutrients required for bee production and breeding, such as proteins, fat, carbohydrates, properly supplement amino acids, minerals, vitamins and bioactive substances with health care function, greatly improve the stability of the active components in the pericarp of the *Ceratonia siliqua* Linn. fruit. While ensuring the nutritional value, the bee feed prepared by the combination of the two ingredients can improve the immunity of bees, prolong the life of bees, improve the quality of the honey produced, being a good substitute for pollen feed. By optimizing the ratio of the extract of the pericarp of the *Ceratonia siliqua* Linn. fruit to the cactus extract in the bee feed, the inventors further find that the bee feed prepared from the extract of the pericarp of the *Ceratonia siliqua* Linn. fruit and the cactus extract at a specific ratio has better effects of improving immunity and reducing mortality of bees.

The contents in parts by weight of the extract of the pericarp of the *Ceratonia siliqua* Linn. fruit and the cactus extract in the bee feed provided by the present invention are as follows: 60 to 99 parts of the extract of the pericarp of the *Ceratonia siliqua* Linn. fruit, and 1 to 40 parts of the cactus extract;

Preferably, in the bee feed provided by the present invention, the contents in parts by weight of the extract of the pericarp of the *Ceratonia siliqua* Linn. fruit and the cactus extract are as follows: 70 to 99 parts of the extract of the pericarp of the *Ceratonia siliqua* Linn. fruit, and 1 to 30 parts of the cactus extract. Preferably, the weight ratio of the extract of the pericarp of the *Ceratonia siliqua* Linn. fruit to the cactus extract is 15:1 to 4:1.

More preferably, the bee feed is composed of the following ingredients in parts by weight: 80 to 99 parts of the extract of the pericarp of the *Ceratonia siliqua* Linn. fruit, and 1 to 20 parts of the cactus extract. Preferably, the weight ratio of the extract of the pericarp of the *Ceratonia siliqua* Linn. fruit to the cactus extract is 9:1 to 4:1.

The extract of the pericarp of the *Ceratonia siliqua* Linn. fruit and the cactus extract of the present invention are both aqueous extracts.

In order to ensure that the functional components are sufficiently extracted, the present invention preferably performs drying and pulverization of the pericarp of the *Ceratonia siliqua* Linn. fruit and cactus before extraction.

The extract of the pericarp of the *Ceratonia siliqua* Linn. fruit provided by the present invention is prepared by a method comprising the following steps: mixing the dried and pulverized pericarp of the *Ceratonia siliqua* Linn. fruit with water, extracting at 40°C to 50°C, centrifuging the obtained extract solution, and concentrating to obtain the extract of the pericarp of the *Ceratonia siliqua* Linn. fruit;

Preferably, the pericarps of the *Ceratonia siliqua* Linn. fruit are separated from the seeds before drying and pulverization, followed by drying at 40°C for 1 day, and cutting the pericarps into pieces having an average particle size of 0.5 to 1.0 cm.

Preferably, in the preparation of the extract of the pericarp of the *Ceratonia siliqua* Linn. fruit, the ratio of water to the pericarp of the *Ceratonia siliqua* Linn. fruit is 1.5:1 to 4:1 (volume : mass), and the extraction is performed at 40°C to 50°C for 1 h to 3h.

The cactus extract of the present invention is prepared by a method comprising the following steps: drying the cactus, pulverizing, mixing with water, extracting at 90°C to 95°C, and concentrating the resulting extract solution to obtain the cactus extract.

Preferably, in the preparation of the cactus extract, the ratio of the cactus to water is 1:10 to 1:16 (mass : volume), the ultrasonic extraction time is 1 h to 3 h, and the extraction can be repeatedly performed for 1 to 3 times.

Further, the present invention provides a method for preparing the bee feed, specifically comprising: uniformly mixing the extract of the pericarp of the *Ceratonia siliqua* Linn. fruit and the cactus extract to obtain a bee feed.

Alternatively, the bee feed is obtained by uniformly mixing the extract of the pericarp of the *Ceratonia siliqua* Linn. fruit and the cactus extract, and adding an auxiliary additive which is acceptable in the feed field.

The whole process of preparing the bee feed of the present invention is completed under the regulations of the operation rules and meets the requirements of the quality standard.

After feeding the bees with the bee feed provided by the present invention which is prepared from the pericarp of *Ceratonia siliqua* Linn. fruit as the main raw material in combination with cactus, the life of the bee is prolonged by 10 days (50%) compared with the most commonly used pollen or nectar feed, the taste of the feed is good, and the feed is highly accepted by the bees. The content of polyphenols and amino acids in the honey produced by the bees is significantly increased, which greatly improves the quality of the honey. The bee feed provided by the present invention can provide comprehensive and reasonable nutrients, meets the needs of bee breeding and honey production, and has the functions of improving the immunity of bees and improving the quality of honey produced by bees. The raw materials thereof are all natural plants that can be planted in large areas, have wide sources, and are safe and low in cost. Accordingly, the bee feed has extremely high marketing promotional value.

The *Ceratonia siliqua* Linn. fruit of the present invention refers to the pod (i.e., fruit) of *Ceratonia siliqua* Linn. belonging to the genus Ceratonia of the family Leguminosae. *Ceratonia siliqua* Linn. is generally cultivated in the Mediterranean coast, Australia and California of the United States, and is an evergreen, drought-tolerant, fire-resistant, and pollution-resistant tree. Its fruit is edible and can also be used as a substitute for chocolate, with medicinal value and industrial value. At present, *Ceratonia siliqua* Linn. leaves and *Ceratonia siliqua* Linn. gum are commonly used as raw materials. The health food provided by the present invention directly uses the pod (i.e., fruit) of the *Ceratonia siliqua* Linn. as a raw material. The *Ceratonia siliqua* Linn. fruit used in the present invention is convenient and easy to obtain, has low price and high yield, and the pericarp thereof contains nutrients such as sugars, proteins, minerals and vitamins, and is rich in condensed tannin.

The *Ceratonia siliqua* Linn. fruit extract of the present invention refers to an extract of the pericarp of the *Ceratonia siliqua* Linn. fruit from which the seeds have been removed, especially an aqueous extract. The aqueous extract may be obtained by using the pericarp of the *Ceratonia siliqua* Linn. fruit from which the seeds have been removed as a raw material, using water as a solvent, and extracting by a conventional method in the art. In order to ensure that the functional components are sufficiently extracted, the extraction temperature of the present invention is preferably 40 to 50°C; more preferably, the pericarp of the *Ceratonia siliqua* Linn. fruit from which the seeds have been removed is subjected to drying and crushing (or cutting) treatment before extraction. It is generally preferred to dry the pericarp to a moisture content of ≤ 10%. It is generally preferred to crush (or cut) the pericarp into pieces having an average particle size of 0.5 to 1.0 cm.

As a preferred embodiment of the present invention, the *Ceratonia siliqua* Linn. fruit extract is prepared by a method comprising the following steps: separating the seeds and the pericarps of the *Ceratonia siliqua* Linn. fruit; drying the pericarp of the *Ceratonia siliqua* Linn. fruit from which the seeds have been removed (for example, drying to a moisture content ≤ 10%; generally drying at 40°C for 1 day), crushing (or cutting) into pieces having an average particle size of 0.5 to 1.0 cm, adding 1.5 to 4 times by weight of water, extracting at 40 to 50°C (for example, extracting for 1 to 3 h); centrifuging to give an extract solution, and concentrating.

Preferably, in the above step, the extract solution is concentrated to a sugar degree (or soluble solids) of 65 to 75 degree to ensure that the *Ceratonia siliqua* Linn. fruit extract has good antiseptic function after being mixed with honey, and has the optimal taste and synergistic health care function.

In some embodiments of the present invention, the *Ceratonia siliqua* Linn. fruit extract is prepared by separating the seeds and the pericarps of the *Ceratonia siliqua* Linn. fruit, drying the pericarps at 40°C for 1 day, and cutting the pericarps into pieces having an average particle size of 0.5 to 1.0 cm, mixing the dried and cut pericarps of the *Ceratonia siliqua* Linn. fruit with water, followed by extracting at 40 to 50°C for 1 to 3 h, at an extracting solvent ratio of water: pericarps (v/w) = 1.5:1 to 4:1 (volume : mass), and separating the extract and the solid phase by centrifugal separation.

In the present invention, in order to ensure that the mixture of the extract of the pericarp of the *Ceratonia siliqua* Linn. fruit and the cactus extract has the best nutritional value and mouthfeel, ensure the synergistic effect of the two ingredients, and maximize the nutritional health care effect, the sugar degree of the extract of the pericarp of the *Ceratonia siliqua* Linn. fruit is 60 to 70 degree, preferably 65 to 70 degree, more preferably 66 to 67 degree.

The content of condensed tannin as the active component in the aqueous extract of the *Ceratonia siliqua* Linn. fruit of the present invention is 15% to 20%.

In some embodiments of the present invention, the *Ceratonia siliqua* Linn. fruit extract has the same meaning as the extract of the pericarp of the *Ceratonia siliqua* Linn. fruit.

The present invention may use edible honey which is conventional in the art.

The raw materials used in the present invention are all commercially available, or can be prepared by conventional methods in the art.

Based on the common knowledge in the art, the above various preferred conditions can be combined with one another to obtain preferred examples of the present invention.

In addition, it should be understood that the meanings of the terms "including", "comprising", "containing" and the like also include the meanings of "consisting of', "composed of', "made of' and the like.

### Specific Modes for Carrying Out the Embodiments

The following examples are intended to illustrate the present invention but are not intended to limit the scope of the present invention. Where specific techniques or conditions are not specified in the examples, they shall be carried out in accordance with the techniques or conditions described in the literatures in the art or in accordance with the product specifications. If the reagents or instruments used do not indicate the manufacturer, they are conventional products that can be purchased through regular channels.

In the following Examples A1-A8, the *Ceratonia siliqua* Linn. fruit extract was prepared by method as follows: drying the pericarps of the *Ceratonia siliqua* Linn. fruit from which the seeds have been removed, cutting into pieces, adding 2.27 times by weight of water, extracting at 45°C for 2 h, centrifuging to give an extract solution, and concentrating to a sugar degree of 66.5 degree.

### Example A1

A health food of *Ceratonia siliqua* Linn. fruit, which is prepared by mixing 5 kg *Ceratonia siliqua* Linn. fruit extract with 98 kg honey.

### Example A2

A health food of *Ceratonia siliqua* Linn. fruit, which is prepared by mixing 20 kg *Ceratonia siliqua* Linn. fruit extract with 90 kg honey.

### Example A3

A health food of *Ceratonia siliqua* Linn. fruit, which is prepared by mixing 30 kg of *Ceratonia siliqua* Linn. fruit extract with 80 kg of honey.

### Example A4

A health food of *Ceratonia siliqua* Linn. fruit, which is prepared by mixing 45 kg of *Ceratonia siliqua* Linn. fruit extract with 70 kg of honey.

### Example A5

A health food of *Ceratonia siliqua* Linn. fruit, which is prepared by mixing 85 kg of *Ceratonia siliqua* Linn. fruit extract and 60 kg of honey.

### Example A6

A health food of *Ceratonia siliqua* Linn. fruit, which is prepared by mixing 120 kg of *Ceratonia siliqua* Linn. fruit extract and 50 kg of honey.

### Example A7

A health food of *Ceratonia siliqua* Linn. fruit, which is prepared by mixing 1 kg of *Ceratonia siliqua* Linn. fruit extract with 100 kg of honey.

### Example A8

A health food of *Ceratonia siliqua* Linn. fruit, which is prepared by mixing 150 kg of *Ceratonia siliqua* Linn. fruit extract with 10 kg of honey.

### Example A9

A health food of *Ceratonia siliqua* Linn. fruit, which is prepared by pulverizing 5 kg of pericarps of the *Ceratonia siliqua* Linn. fruit from which the seeds have been removed, and mixing with 98 kg of honey.

### Example A10

A health food of *Ceratonia siliqua* Linn. fruit, which is the same as that of Example A1 except that, the extraction temperature during the preparation of the *Ceratonia siliqua* Linn. fruit extract was room temperature (25°C).

### Example A11

The health food of *Ceratonia siliqua* Linn. fruit according to Examples A1-A10 were respectively used as basic raw materials, and then appropriate auxiliary materials which are available in the food field were added to prepare beverages, jams, candies, bee products or meal replacements and the like by conventional technical methods.

In the following Experimental Examples, honey was used as a comparative sample A1, and a *Ceratonia siliqua* Linn. fruit extract prepared by the same method as that of Example A1 was used as a comparative sample A2.

### Experimental Example A1: Experiment concerning therapeutic effect on constipation

### 1. Test samples

Health food according to Examples A1-A10, comparative sample A1, comparative sample A2.

### 2. Experimental methods

A total of 480 patients with constipation were randomly divided into 12 groups, 40 patients in each group. Each group took the above test samples once a day, and the daily dose was 10 g.

The subjects met the following criteria: (1) The course of constipation was greater than 6 months, and there was a symptom onset in the last 3 months; (2) those subjects were older than 16 years old and less than 80 years old; and (3) the patients signed informed consent and volunteered to participate in the study.

Constipation clinical scoring: (1) spontaneous defecation: Yes (0 score), defecation with the aid of drugs, hand-assisted or enema defecation (3 scores); (2) awareness of defecation: Yes (0 score), No (1 score); (3) frequency of spontaneous defecation: defecate once in 1 to 2 days (0 score), defecate once in 3 to 4 days (1 score), defecate once in 5 to 6 days (2 scores), defecate once in more than 6 days (3 scores), incapable of spontaneous defecation (4 scores); (4) degree of the difficult of defecation: natural defecation, no difficulty in defecation (0 score), forced defecation (1 score), struggling to defecate (2 scores); (5) time for each defecation: 1 to 10 min (0 score), 11 to 20 min (1 score), 21 to 30 min (2 scores), 30 min or more (3 scores); (6) stool quality: scattered hard blocks (3 scores), hard blocks in strips (2 scores), strips with cracks (1 score), smooth and soft strips (0 score); (7) the six symptoms of abdominal distension, abdominal pain, a sense of incomplete defecation, a fall bulge feeling at anal, a sense of anal obstruction and a sense of exhaust obstruction were all scored in 4 grades as No (0 score), slight (1 score), obvious (2 scores), and unbearable (3 scores).

The following criteria for evaluating the therapeutic effect on main symptoms were made according to the therapeutic effect evaluation standard, *Guidelines for Clinical Research of New Drugs of Traditional Chinese Medicine,* in combination with the clinic situation: (1) clinical recovery: main symptoms disappeared, defecation was normal, and the score of clinical symptoms of constipation was 0; (2) markedly effective: clinical symptoms were improved significantly, and the clinical symptom score was decreased by ≥2/3 compared with that before treatment; (3) effective: the clinical symptoms were improved, and the clinical symptom score was decreased by 1/2 to 2/3; (4) improved: the clinical symptoms were improved, but the clinical symptom score was decreased by ≤ 1/2 compared with that before treatment; (5) ineffective: no improvement or aggravation of clinical symptoms, and the clinical symptom score did not decrease, or on the contrary, increased.

3. The experimental results were shown in Table A1.

**Table A1: Human constipation test results**

| | Com parati ve samp le A1 | Com parati ve samp le A2 | Exa mple A1 | Exa mple A2 | Exa mple A3 | Exa mple A4 | Exa mple A5 | Exa mple A6 | Exa mple A7 | Exa mple A8 | Exa mple A9 | Exa mple A10 |
|---|---|---|---|---|---|---|---|---|---|---|---|---|
| Recovery (cases) | 0 | 0 | 6 | 10 | 12 | 7 | 4 | 4 | 0 | 1 | 0 | 1 |
| Markedly effective (cases) | 3 | 2 | 9 | 12 | 10 | 10 | 6 | 5 | 2 | 4 | 1 | 5 |
| Effective (cases) | 3 | 2 | 10 | 11 | 14 | 11 | 10 | 6 | 5 | 3 | 9 | 8 |
| Improved (cases) | 8 | 12 | 6 | 3 | 1 | 5 | 8 | 9 | 10 | 10 | 7 | 6 |
| Ineffectiv e (cases) | 26 | 24 | 9 | 4 | 3 | 7 | 12 | 16 | 23 | 22 | 23 | 20 |
| Effective rate (%) | 35 | 40 | 77.5 | 90 | 92.5 | 82 | 70 | 60 | 42.5 | 45 | 42.5 | 50 |

From the results of Table A1, it can be seen that eating the *Ceratonia siliqua* Linn. fruit extract or honey alone had a certain effect on constipation, but the effective rate was relatively low. When the *Ceratonia siliqua* Linn. fruit extract and honey were compounded according to a certain ratio, the effective rate was greatly improved. When the weight ratio of the *Ceratonia siliqua* Linn. fruit extract to honey was (20 to 30):(80 to 90), the therapeutic effect on constipation was particularly remarkable. It can be seen that the health food provided by the present invention had a good therapeutic effect on constipation, and the effective ingredients can exert a synergistic effect.

### Experimental Example A2: Experiment concerning regulating effect on intestinal flora

### 1. Test samples

The samples were the same as those of Experimental Example A1.

### 2. Experimental methods

Animals: 20±2 g Kunming species, 130 healthy female mice were randomly divided into 13 groups, 10 mice in each group.

The above test samples were administered to the test groups and the control groups, respectively, the test samples were intragastrically administered in an amount of 1.67 g/(kg·bw) per day, the administration amount was adjusted according to the weekly weight gain and loss, and the intragastric administration was continuously performed for 14 days.

The blank control group were intragastrically administered with sterile purified water. At the time before administration of the test samples and the time 24 h after the last administration of the test samples, the feces of all the mice in each group were aseptically collected, and placed in a weighed dry sterilized test tube containing glass beads, followed by weighing, calculating the amount of the mice feces, diluting with a sterilized diluting solution to prepare a uniform suspension, then diluting to an appropriate degree of dilution, and inoculating on a culture medium respectively for culturing as required. After the cultivation, the number of bacteria per gram of wet feces was calculated, and the logarithm was taken for statistical processing. The changes of *Bifidobacterium,, Lactobacillus, Enterobacter, Enterococcus, Bacteroides,* and *Clostridium perfringens* were compared before and after the test.

### 3. Experimental results

The influences on body weight of the mice and the intestinal flora of the mice were shown in Table A2 and Table A3, respectively.

**Table A2: Influences on body weight of the mice**

| Groups | Initial body weight (g) | Final body weight (g) | P value |
|---|---|---|---|
| Blank control group | 21.59±0.28 | 31.12±1.69 | >0.05 |
| Comparative sample A1 | 21.57±0.30 | 31.23±1.52 | >0.05 |
| Comparative sample A2 | 21.56±0.31 | 31.34±1.55 | >0.05 |
| Example A1 | 21.59±0.27 | 31.58±1.28 | >0.05 |
| Example A2 | 21.58±0.30 | 31.46±1.56 | >0.05 |
| Example A3 | 21.62±0.24 | 31.41±1.71 | >0.05 |
| Example A4 | 21.59±0.29 | 31.53±1.64 | >0.05 |
| Example A5 | 21.58±0.28 | 31.47±1.39 | >0.05 |
| Example A6 | 21.60±0.31 | 31.46±1.60 | >0.05 |
| Example A7 | 21.58±0.25 | 31.50±1.37 | >0.05 |
| Example A8 | 21.60±0.20 | 31.51±1.70 | >0.05 |
| Example A9 | 21.56±0.23 | 31.53±1.55 | >0.05 |
| Example A10 | 21.59±0.22 | 31.49±1.43 | >0.05 |

It can be seen from Table A2 that, when comparing the body weight of each experimental group and the blank control group before and after the test, the differences were not significant, indicating that the test samples have no significant influences on the body weight of the mice.

**Table A3: Influences on the intestinal flora of the mice (comparison of t values of the flora before and after administration)**

| | Blank contr ol | Com parati ve sampl e A1 | Com parati ve sampl e A2 | Exam ple A1 | Exam ple A2 | Exam ple A3 | Exam ple A4 | Exam ple A5 | Exam ple A6 | Exam ple A7 | Exam ple A8 | Exam ple A9 | Exam ple A10 |
|---|---|---|---|---|---|---|---|---|---|---|---|---|---|
| *Bifidoba cterium* | 0.12 | 0.19^{◇} | 0.27^{◇} | 1.79* | 2.53** | 2.46** | 2.05** | 1.93* | 2.18* | 0.58^{◇} | 0.76^{◇} | 0.13^{◇} | 0.15^{◇} |
| *Lactoba cillus* | 0.10 | 0.20^{◇} | 0.25^{◇} | 1.42* | 1.95* | 2.22** | 2.36** | 2.27* | 1.59* | 0.67^{◇} | 0.53^{◇} | 0.12^{◇} | 0.11^{◇} |
| *Enterob acter* | 0.61 | 0.55^{◇} | 0.68^{◇} | 0.53^{◇} | 0.57^{◇} | 0.60^{◇} | 0.62^{◇} | 0.54^{◇} | 0.65^{◇} | 0.54^{◇} | 0.63^{◇} | 0.59^{◇} | 0.62^{◇} |
| *Enteroc occus* | 0.49 | 0.48^{◇} | 0.50^{◇} | 0.46^{◇} | 0.49^{◇} | 0.47^{◇} | 0.45^{◇} | 0.48^{◇} | 0.44^{◇} | 0.51^{◇} | 0.54^{◇} | 0.48^{◇} | 0.55^{◇} |
| *Bacteroi des* | 0.17 | 0.24^{◇} | 0.19^{◇} | 0.16^{◇} | 0.14^{◇} | 0.13^{◇} | 0.12^{◇} | 0.15^{◇} | 0.17^{◇} | 0.16^{◇} | 0.21^{◇} | 0.21^{◇} | 0.16^{◇} |
| *Clostridi um perfring ens* | 0.64 | 0.65^{◇} | 0.63^{◇} | 0.63^{◇} | 0.61^{◇} | 0.60^{◇} | 0.62^{◇} | 0.58^{◇} | 0.59^{◇} | 0.66^{◇} | 0.64^{◇} | 0.59^{◇} | 0.66^{◇} |

| | | | | | | | | | | | | | |
|---|---|---|---|---|---|---|---|---|---|---|---|---|---|
| Note: omparison with the blank control group, ◇ represents P > 0.05, * represents P < 0.05, and ** represents P < 0.01. | | | | | | | | | | | | | |

It can be seen from Table A3, the numbers of *Bifidobacteria* and *Lactobacillus* in the groups A1-A6 after oral administration of the test samples were significantly increased compared with those before oral administration of the test samples, and the difference was significant (P<0.05); and there was no significant difference in the number change of *Enterobacter, Enterococcus, Bacteroides* and *Clostridium perfringens* (P> 0.05). The results showed that the health food of the present invention has the effect of regulating the balance of the intestinal flora.

### Experimental Example A3: Radiation protection experiment

### 1. Test samples

The test samples were the same as those of Experimental Example A1.

### 2. Peripheral blood leukocyte counting experiment

### 2.1 Experimental methods

Animals: 140 healthy female mice (20±2 g) were randomly divided into groups according to body weight, 10 mice in each group.

Peripheral blood leukocyte counting experiment: Except for the blank control group and the radiation control group, the rest 12 groups were intragastrically administered with the above test samples in an amount of 1.67 g/(kg·bw) once per day, and the intragastric administration was continuously performed for 14 days. Each group ate and drank water normally.

Except for the blank control group, one-time whole body irradiation (the total dose absorbed was 4.5 Gy) with ⁶⁰Co γ-rays was performed on the 14^{th} day, and the feed was continued to be given. Before irradiation, and on the 3^{rd} day and 14^{th} day after irradiation, 20 µL of the peripheral blood was respectively collected for three times, followed by adding into 0.38 mL of 1% (by mass fraction) hydrochloric acid, mixing well, and measuring the number of peripheral blood leukocytes by a fully-automatic blood cell counter.

### 2.2 Experimental results

The influences of irradiation on peripheral blood leukocytes of the mice were shown in Table A4.

**Table A4: Influences of irradiation on peripheral blood leukocytes of the mice (number of leukocytes)**

| Groups | Before irradiation (×10⁹/L) | The 3^{rd} day after irradiation (×10⁹/L) | The 14^{th} day after irradiation (×10⁹/L) |
|---|---|---|---|
| Blank control group | 8.27±0.86 | 8.09±1.72 | 8.23±1.16 |
| Irradiation control group | 8.40±0.91 | 0.78±0.12* | 0.84±0.16* |
| Comparative sample A1 | 7.89±0.78 | 0.86±0.14^{#} | 0.93±0.20^{##} |
| Comparative sample A2 | 8.53±1.10 | 0.96±0.13^{##} | 1.06±0.17^{##} |
| Example A1 | 8.46±0.75 | 1.76±0.30^{##ΔΔ} | 2.52±0.15^{##ΔΔ} |
| Example A2 | 8.33±0.78 | 1.82±0.33^{##ΔΔ} | 2.63±0.28^{##ΔΔ} |
| Example A3 | 8.29±0.80 | 1.97±0.26^{##ΔΔ} | 2.94±0.36^{##ΔΔ} |
| Example A4 | 8.48±0.94 | 1.87±0.31^{##ΔΔ} | 2.81±0.19^{##ΔΔ} |
| Example A5 | 8.51±0.93 | 1.86±0.29^{##ΔΔ} | 2.64±0.17^{##ΔΔ} |
| Example A6 | 8.33±1.02 | 1.78±0.17^{##ΔΔ} | 2.59±0.15^{##ΔΔ} |
| Example A7 | 8.42±0.82 | 0.89±0.27^{##Δ} | 0.97±0.18^{##Δ} |
| Example A8 | 8.39±0.92 | 1.17±0.22^{##ΔΔ} | 1.28±0.37^{##ΔΔ} |
| Example A9 | 8.27±0.63 | 0.98±0.15^{##Δ} | 1.17±0.33^{##ΔΔ} |
| Example A10 | 8.52±1.25 | 1.02±0.25^{##ΔΔ} | 1.18±0.14^{##ΔΔ} |

| | | | |
|---|---|---|---|
| Note: In comparison of the irradiation control group with the blank control group with, * represents P<0.01. In comparison of each experimental group with the irradiation control group, ^{#} represents P<0.05, and ^{##} represents P<0.01. In comparison of Examples A1-A10 with the comparative sample A1 and the comparative sample A2, ^{Δ} represents P<0.05, and ^{ΔΔ} represents P<0.01. | | | |

It can be seen from Table A4 that the number of leukocytes in the irradiation control group was significantly lower than that in the blank control group on the 3^{rd} day after the one-time whole body irradiation with ⁶⁰Co γ-rays, indicating that the irradiation damage model was established. In Examples A1-A10, the number of peripheral blood leukocytes was significantly increased compared with the irradiation control group (P<0.01). On the 14^{th} day after irradiation, the number of peripheral blood leukocytes was significantly increased in the groups of Examples A1-A10 compared with the comparative sample A1 and the comparative sample A2 (P<0.05, or P<0.01).

### 3. Influence on DNA content of bone marrow cells

### 3.1 Experimental methods

Animals: 140 healthy female mice (20±2 g) were randomly divided into groups according to body weight, 10 mice in each group.

Peripheral blood leukocyte counting experiment: Except for the blank control group and the radiation control group, the rest 12 groups were intragastrically administered with the above test samples in an amount of 1.67 g/(kg·bw) once per day, and the intragastric administration was continuously performed for 14 days. Each group ate and drank water normally.

Except for the blank control group, one-time whole body irradiation (the total dose absorbed was 4.5 Gy) with ⁶⁰Co γ-rays was performed on the 14th day, and the feed was continued to be given. On the 3^{rd} day after irradiation, the mice were killed by cervical dislocation, and the femur was peeled out. A certain volume of Hank's solution was taken with a 1 mL syringe, all the bone marrow cells in the femur were washed out and fully dispersed, and the DNA content of bone marrow cells was measured at 260 nm using an ultraviolet spectrophotometer. The influences of irradiation on DNA content of bone marrow cells of the mice were shown in Table A5.

### 3.2 Experimental results

**Table A5: Influences of irradiation on DNA content of bone marrow cells of the mice**

| Groups | DNA content of bone marrow cells (A value) |
|---|---|
| Blank control group | 1.19±0.25 |
| Irradiation control group | 0.29±0.11^{aa} |
| Comparative sample A1 | 0.30±0.09^{b} |
| Comparative sample A2 | 0.32±0.06^{bb} |
| Example A1 | 0.47±0.08^{bbcc} |
| Example A2 | 0.49±0.07^{bbcc} |
| Example A3 | 0.56±0.08^{bbcc} |
| Example A4 | 0.55±0.09^{bbcc} |
| Example A5 | 0.52±0.06^{bbcc} |
| Example A6 | 0.48±0.05^{bbcc} |
| Example A7 | 0.31±0.25^{bbc} |
| Example A8 | 0.45±0.04^{bbcc} |
| Example A9 | 0.37±0.03^{bbcc} |
| Example A10 | 0.37±0.45^{bbcc} |

| | |
|---|---|
| Note: In comparison of the irradiation control group with the blank control group, a represents P<0.05, and aa represents P<0.01. In comparison of each experimental group with the irradiation control group, b represents P<0.05 and bb represents P<0.01. In comparison of Examples A1-A10 with the comparative sample A1 and the comparative sample A2, c represents P<0.05, and cc represents P<0.01. | |

It can be seen from Table A5 that the DNA content of bone marrow cells in the irradiation control group was significantly lower than that in the blank control group on the 3^{rd} day after the one-time whole body irradiation with ⁶⁰Co γ-rays (P<0.01), indicating that the irradiation damage model was established. In Examples A1-A10, the DNA content of bone marrow cells was significantly increased compared with the irradiation control group (P<0.01). On the 3^{rd} day after irradiation, the DNA content of bone marrow cells was significantly increased in the groups of Examples A1-A10 compared with the comparative sample A1 and the comparative sample A2 (P<0.05, or P<0.01).

### Experimental Example A4: Antioxidative effect experiment

### 1. Test samples

The test samples were the same as those of Experimental Example A1. The positive control was vitamin E.

### 2. Experimental methods

Animals: 25 to 30 g Kunming species, 150 healthy male mice were randomly divided into 15 groups, 10 mice in each group.

The animal model of oxidative damage was constructed by intraperitoneal injection of D-galactose, and the *in vivo* anti-oxidation test of the mice was carried out. The injection dose was 1.0 g/(kg·bw), once a day, and continuous injection was performed for 6 weeks. After successful modeling, administration was carried out according to the following doses:
Negative control group: equal amount of distilled water;
Model control group: equal amount of distilled water;
Positive control group: vitamin E 0.2 g/(kg·bw);
Each experimental group: each test sample 0.83 g/(kg·bw).

After continuous intragastric administration for 30 days, at the end of the experiment, eyeballs of the mice were removed and blood was collected to determine the activity of superoxide dismutase (SOD) in serum.

The experimental results were shown in Table A6.

**Table A6: SOD content in serum of the mice after oxidative damage**

| Groups | SOD/U·mL⁻¹ |
|---|---|
| Negative control group | 189.37±12.67 |
| Model control group | 126.59±13.28^{#} |
| Positive control group | 167.34±11.45** |
| Comparative sample A1 | 125.96±12.33* |
| Comparative sample A2 | 129.57±10.51** |
| Example A1 | 163.21±10.58^{Δ}**^{∇∇} |
| Example A2 | 166.32±10.91^{Δ}**^{∇∇} |
| Example A3 | 166.93±12.22^{Δ}**^{∇∇} |
| Example A4 | 172.33±10.03^{Δ}**^{∇∇} |
| Example A5 | 170.20±13.13^{Δ}**^{∇∇} |
| Example A6 | 168.13±10.63^{Δ}**^{∇∇} |
| Example A7 | 127.95±11.59**^{∇∇} |
| Example A8 | 135.32±10.63**^{∇∇} |
| Example A9 | 131.33±11.46**^{∇∇} |
| Example A10 | 132.81±11.36**^{∇∇} |

| | |
|---|---|
| Note: In comparison of the model control group with the negative control group, # represents P<0.01. In comparison of each experimental group with the positive control group, Δ represents P>0.05. In comparison of each experimental group with the model control group, * represents P<0.05, and ** represents P<0.01. In comparison of the group of Examples with the comparative sample A1 and the comparative sample A2, ^{∇} represents P<0.05, and ^{∇∇} represents P<0.01. | |

It can be seen from Table A6, the SOD content in the serum of the mice of the model control group was significantly different from that of the negative control (P<0.01), indicating that the D-galactose peroxidation damage model was successfully established. Examples A1-A10 were significantly different from the model control group (P<0.01). The differences between Examples A1-A6 and the positive control group were not significant (P>0.05). The differences between Examples A1-A10 and comparative samples A1-A2 were significant (P<0.01). The results showed that the health food of the present invention was excellent in antioxidative effect.

### Experimental Example A5: Bactericidal effect experiment

### 1. Test samples

The test samples were the same as those of Experimental Example A1.

### 2. Experimental methods

Bacterial strains: *Helicobacter pylori, Escherichia coli, Staphylococcus aureus, Candida albicans.*

Hydrolyzed casein (MH) broth and agar medium were used.

After the standard strains were subcultured, the strains were taken to an inoculating loop for inoculating the strains in the MH broth medium, and then cultured in an incubator at 37°C for 6 hours. The quantity of bacteria was determined and counted by turbidimetry. Different test bacterial liquids cultured for 6 hours were taken in same amount, and the bacterial liquids were evenly spread on the surface of a MH agar plate with a sterile cotton swab, and after drying slightly, plural pieces of circular filter paper soaked with same amount of sterile liquids of the comparative samples A1-A2 and the health foods of Examples A1-A10 were taken respectively using sterile forceps, and stuck on the surface of the MH agar plate, and then cultured in an incubator at 37°C for 24 hours. The diameters (mm) of the inhibition zones were observed and measured. The bacteriostatic experiment was repeated for 3 times. The bacteriostatic results were the average of three experiments, and the results were shown in Table A7.

**Table A7: Bactericidal test results (diameters of the inhibition zones, mm)**

| Bacterial strains | Com parat ive samp le A1 | Com parat ive samp le A2 | Exa mple A1 | Exa mple A2 | Exa mple A3 | Exa mple A4 | Exa mple A5 | Exa mple A6 | Exa mple A7 | Exa mple A8 | Exa mple A9 | Exa mple A10 |
|---|---|---|---|---|---|---|---|---|---|---|---|---|
| *Helicobacter pylori* | 2 | 7 | 10 | 12 | 13 | 20 | 18 | 16 | 5 | 10 | 6 | 9 |
| *Escherichia coli* | 6 | 8 | 9 | 14 | 16 | 19 | 19 | 17 | 6 | 11 | 7 | 8 |
| *Staphylococcus aureus* | 6 | 9 | 12 | 15 | 17 | 23 | 20 | 19 | 8 | 12 | 9 | 11 |
| *Candida albicans* | 3 | 5 | 13 | 13 | 14 | 21 | 19 | 18 | 5 | 9 | 8 | 8 |

Conclusion: From the results of Table A7, it can be seen that, the bactericidal effects of Examples A1-A6 were significantly better than comparative samples A1-A2 and Examples A7-A10, indicating that the health food of the present invention has better bactericidal effect.

### Experimental Example A6: Experiment on heavy metal expelling effect

### 1. Test samples

The test samples were same as those of Experimental Example A1.

### 2. Experimental methods

Animals: 20±2 g Kunming species, 140 healthy male mice were randomly divided into 14 groups, 10 mice in each group.

Except for the blank control group, the rest groups were intraperitoneally injected with lead acetate solution in an amount of 50 mg/kg·d every day, and the poisoning was stopped after 14 days of continuous poisoning. The blank control group and the model control group were intragastrically administered with deionized water, and the groups of Examples A1-A10 and the groups of comparative samples A1-A2 were respectively intragastrically administered in an amount of 1.67 g/(kg·bw) every day. After 30 days of continuous administration, the femur on one side and liver of the mice were taken and the content of lead was measured by an atomic spectrophotometer.

Specific method: 50% of the femur on one side of a mouse was taken, weighed, digested, and added with dilute nitric acid to a constant volume of 5ml. Liver was taken and measured by an atomic spectrophotometer according to the same method to give the lead content in the liver tissue. T test was used for statistic analysis of the above data. The results were shown in Table A8.

**Table A8: Influence on lead contents in the femur and liver of the mice**

| Groups | Lead content in the femur (mg/kg) | Lead content in the liver (mg/kg) |
|---|---|---|
| Blank control group | 1.36±0.28 | 0.59±0.15 |
| Model control group | 263.72±42.62^{◊} | 3.12±0.51^{◊} |
| Comparative sample A1 | 251.98±24.09** | 3.05±0.36** |
| Comparative sample A2 | 247.66±28.98** | 2.91±0.39** |
| Example A1 | 210.13±21.16**^{##} | 2.23±0.24**^{##} |
| Example A2 | 206.08±31.26**^{##} | 2.17±0.42**^{##} |
| Example A3 | 205.37±25.08**^{##} | 2.16±0.32**^{##} |
| Example A4 | 203.62±29.17**^{##} | 2.06±0.35**^{##} |
| Example A5 | 204.71±23A3**^{##} | 2.11±0.23**^{##} |
| Example A6 | 205.13±21.24**^{##} | 2.12±0.37**^{##} |
| Example A7 | 250.24±26.15**^{#} | 3.01±0.47*^{##} |
| Example A8 | 219.42±22.56**^{##} | 2.31±0.33**^{##} |
| Example A9 | 243.57±25.78**^{##} | 2.89±0.43**^{##} |
| Example A10 | 236.33±23.46**^{##} | 2.73±0.36**^{##} |

| | | |
|---|---|---|
| Note: In comparison of the model control group with the blank control group, ◊ represents P<0.01. In comparison of each experimental group with the model control group, * represents P<0.05, and ** represents P<0.01. In comparison of the Examples A1-A10 with the comparative samples A1-A2, # represents P<0.05, and ## represents P<0.01. | | |

It can be seen from Table A8 that, the lead content in the femur and the lead content in the liver of the model control group were significantly different from that of the blank control group (P<0.01), indicating that the model was successfully established. The lead contents in the femur and liver of the model control group were significantly lower than that of the model control group (P<0.01), and in Examples A1-A10, the contents were all significantly lower than the comparative samples A1-A2 (P<0.01). The results showed that each Example of the present invention has a significant lead expelling effect.

In the following Examples B1-B4, the *Ceratonia siliqua* Linn. fruit extract was prepared by the following method: drying the pericarp of the *Ceratonia siliqua* Linn. fruit from which the seeds have been removed, cutting into pieces, adding 2.27 times by weight of water, extracting at 45°C for 2 h, centrifuging to obtain an extraction solution, and concentrating to a sugar degree of 66.5 degree.

The preparation method of a cactus extract described below comprises: washing the cactus, peeling, slicing, oven drying, pulverizing, mixing with water at a ratio of the raw material to water of 1:15, performing ultrasonic extraction at 90°C for 1.5 h to obtain an extract solution, and spray drying the resulting extract solution to obtain a cactus extract.

The following Noni Puree meets the requirements of the Ministry of Health in China (Announcement on approval of five kinds of substances such as Golden Camellia and *Inula nervosa* Wall.ex DC. as new resource foods, No. 9, 2010).

The preparation method of the following compositions of Examples B1-B6 comprises: first mixing the cactus extract with the *Ceratonia siliqua* Linn. fruit extract, homogenizing at 45°C to 50°C for 8 to 10 min, then fully stirring at a speed of 8000 to 10000 rpm, allowing to stand for 40 min to be fully microencapsulated, then adding honey, Noni Puree, stirring at a low speed, and uniformly mixing. The compositions of Comparative Examples B1, B2 and B4 were prepared by mixing in a conventional manner.

### Example B1

A composition was prepared from 10 kg of *Ceratonia siliqua* Linn. fruit extract, 15 kg of cactus extract, 50 kg of honey and 1 kg of Noni Puree by mixing.

### Example B2

A composition was prepared from 30 kg of *Ceratonia siliqua* Linn. fruit extract, 20 kg of cactus extract, 40 kg of honey and 2 kg of Noni Puree by mixing.

### Example B3

A composition was prepared from 50 kg of *Ceratonia siliqua* Linn. fruit extract, 30 kg of cactus extract, 20 kg of honey and 4 kg of Noni Puree by mixing.

### Example B4

A composition was prepared from 70 kg of *Ceratonia siliqua* Linn. fruit extract, 50 kg of cactus extract, 10 kg of honey and 6 kg of Noni Puree by mixing.

### Example B5

A composition was prepared from 10 kg of *Ceratonia siliqua* Linn. fruit powder, 15 kg of cactus extract, 50 kg of honey and 1 kg of Noni Puree by mixing.

The *Ceratonia siliqua* Linn. fruit powder of the present Example was obtained by directly pulverizing the pericarp of *Ceratonia siliqua* Linn. fruit (that is, the step of preparing the extract was omitted).

### Example B6

A composition was prepared from 10 kg of *Ceratonia siliqua* Linn. fruit extract, 15 kg of cactus extract, 50 kg of honey and 1 kg of Noni Puree by mixing.

The *Ceratonia siliqua* Linn. fruit extract described in the present Example was the same as that used in Examples B1-B4 except that the extraction temperature was room temperature (25°C) during the preparation.

### Example B7

Beverages, jams, candies, bee products, and/or meal replacement were obtained by taking any one of the compositions of Examples B1-B6, adding an auxiliary material which is acceptable in the food field as needed, and processing.

### Comparative Example B1

A composition was prepared from 10 kg of cactus extract, 40 kg of honey and 5 kg of Noni Puree by mixing.

### Comparative Example B2

A composition was prepared from 50 kg of *Ceratonia siliqua* Linn. fruit extract, 40 kg of honey and 5 kg of Noni Puree by mixing.

### Comparative Example B3

A composition was prepared from 50 kg of *Ceratonia siliqua* Linn. fruit extract, 10 kg of cactus extract and 5 kg of Noni Puree by mixing. The preparation method comprises: first mixing the cactus extract with the *Ceratonia siliqua* Linn. fruit extract, homogenizing at 45°C to 50°C for 8 to 10 min, then fully stirring at a speed of 8000 to 10000 rpm, allowing to stand for 40 min to be fully microencapsulated, then adding Noni Puree, stirring at a low speed, and mixing well.

### Comparative Example B4

A composition was prepared from 30 kg of *Ceratonia siliqua* Linn. fruit extract and 80 kg of honey by mixing.

### Experimental Example B1: Anti-oxidation Experiment

1. Test samples: The compositions prepared in Examples B1-B6 and Comparative Examples B1-B4.

### 2. Experimental methods

Animals: 25 to 30 g Kunming species, 130 healthy male mice were randomly divided into 13 groups, 10 mice in each group.

Except for the blank control group, each group was treated with D-galactose intraperitoneal injection to construct an animal oxidative damage model, and the *in vivo* anti-oxidation test of the composition in mice was carried out. The injection dose was 1.0 g/(kg·bw), once a day, and continuous injection was performed for 6 weeks. After successful modeling, administration was carried out according to the following doses:
Blank control group: equal amount of distilled water;
Model control group: equal amount of distilled water;
Positive control group: vitamin E 0.2 g/(kg·bw);
Each experimental group: each composition 1.0 g/(kg·bw);

After continuous intragastric administration for 30 days, the experiment was stopped and eyeballs of the mice were removed and blood was collected to determine the activity of superoxide dismutase (SOD) in serum.

### 3. Experimental results

After oxidative damage, the superoxide dismutase contents were shown in Table B1.

**Table B1: SOD contents in serum of the mice after oxidative damage**

| Groups | SOD/U·mL⁻¹ |
|---|---|
| Blank control group | 191.21±11.32 |
| Model control group | 131.05±11.20^{#} |
| Positive control group | 172.96±12.33 |
| Comparative Example B1 | 145.17±10.94 |
| Comparative Example B2 | 162.51±9.80 |
| Comparative Example B3 | 165.32±10.51 |
| Comparative Example B4 | 169.43±12.22 |
| Example B1 | 191.44±10.96**^{∇∇} |
| Example B2 | 187.34±10.64**^{∇∇} |
| Example B3 | 194.31±9.87**^{∇∇} |
| Example B4 | 197.05±12.11**^{∇∇} |
| Example B5 | 174.39±11.23**^{∇∇} |
| Example B6 | 178.73±12.16**^{∇∇} |

| | |
|---|---|
| Note: In comparison of the model control group with the blank control group, # represents P<0.01. In comparison of each experimental group with the model control group, * represents P<0.05, and ** represents P<0.01. In comparison of the group of Examples with the group of Comparative Examples, ^{∇} represents P<0.05, and ^{∇∇} represents P<0.01. | |

It can be seen from Table B1 that, the SOD content in the serum of the mice of the model control group was significantly different from that of the blank control (P<0.01), indicating that the D-galactose peroxidation damage model was successfully established. The Examples B1-B6 were significantly different from the model control group (P<0.01). The differences between Examples B1-B6 and Comparative Examples B1-B4 were significant (P<0.01). The above results showed that, in the case of the same amount of effective ingredients, the compositions of Examples B1-B6 have an excellent antioxidative effect, which is significantly superior to the compositions of Comparative Examples B1-B4, and the four ingredients of *Ceratonia siliqua* Linn. fruit, honey, cactus and Noni Puree have synergistic effect in anti-oxidation.

### Experimental example B2: Experiment on reducing blood-glucose

1. Test samples: The compositions prepared in Examples B1-B6 and Comparative Examples B1-B4.

### 2. Experimental methods

Animal: Kunming mice weighing 26±2 g. Ten mice were randomly selected from healthy male mice as a blank control group.

Except for the blank control group, the rest mice were given alloxan in a dose of 40 mg/kg bw after 24 hours of fasting. After 5 days, fasting was performed for 12 hours, blood-glucose was measured, and body weight, food intake, and water intake were recorded and compared. A high blood-glucose model has a blood-glucose level of 11.1 mmol/L or more. The mice as the high blood-glucose model were grouped, 10 mice in each group.
Blank control group: saline was intragastrically administered in an amount of 0.2 ml/(kg•bw);
Model control group: saline was intragastrically administered in an amount of 0.2 ml/(kg•bw);
Experimental group: compositions were intragastrically administered to each Examples and Comparative Examples in an amount of 2 g/(kg•bw) once a day for 30 days.

The blood-glucose levels of the mice before and after the test were measured.

3. The test results were shown in Table B2:

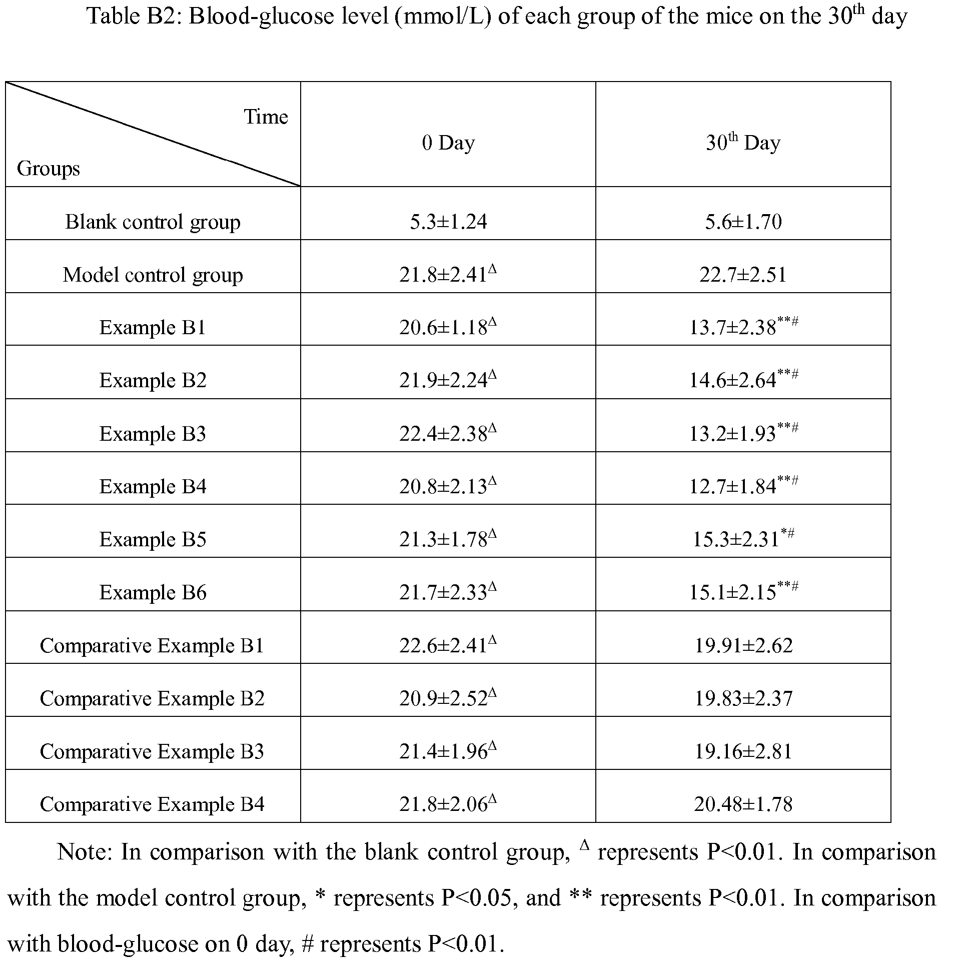

It can be seen from the above table that, the model control group had a significant increase in blood-glucose compared with the blank control group, and the symptoms of polydipsia, polyphagia and emaciation appeared, indicating that the diabetic animal models were successfully established. The blood-glucose level of each group of the Examples was significantly lower than that of the model control group, indicating that the compositions of the Examples have blood-glucose lowering effects.

Unless otherwise specified, preparation method of the *Ceratonia siliqua* Linn. fruit extract mentioned below comprises: taking dried and pulverized *Ceratonia siliqua* Linn. fruit as a raw material, adding 2.27 times by weight of water, extracting at 45°C for 2 h to obtain an extract solution, centrifuging to obtain a supernatant, and concentrating to a sugar degree of 66.5 degree.

The following American ginseng extract, Radix Astragali extract, olive extract, grape seed extract, Cassia seed extract, *Tribulus terrestris* extract, lily extract, chrysanthemum extract, and Fructus Lycii extract were all aqueous extracts.

### Example C1

A composition was prepared from 10 kg of *Ceratonia siliqua* Linn. fruit extract, 50 kg of honey, 10 kg of American ginseng extract and 15 kg of Radix Astragali extract by mixing.

### Example C2

A composition was prepared from 50 kg of *Ceratonia siliqua* Linn. fruit extract, 10 kg of honey, 15 kg of American ginseng extract and 10 kg of Radix Astragali extract by mixing.

### Example C3

A composition was prepared from 60 kg of *Ceratonia siliqua* Linn. fruit extract, 10 kg of honey, 10 kg of American ginseng extract, and 10 kg of Radix Astragali extract by mixing.

### Example C4

A composition was prepared from 10 kg of *Ceratonia siliqua* Linn. fruit extract, 60 kg of honey, 10 kg of American ginseng extract and 10 kg of Radix Astragali extract by mixing.

### Example C5

A composition was prepared from 30 kg of *Ceratonia siliqua* Linn. fruit extract, 20 kg of honey, 15 kg of American ginseng extract and 20 kg of Radix Astragali extract by mixing.

### Example C6

A composition was prepared from 35 kg of *Ceratonia siliqua* Linn. fruit extract, 15 kg of honey, 30 kg of American ginseng extract and 10 kg of Radix Astragali extract by mixing.

### Example C7

A composition was prepared from 30 kg of *Ceratonia siliqua* Linn. fruit extract, 20 kg of honey, 10 kg of American ginseng extract and 30 kg of Radix Astragali extract by mixing.

### Example C8

A composition was prepared from 10 kg of *Ceratonia siliqua* Linn. fruit extract, 30 kg of honey, 25 kg of American ginseng extract, 20 kg of olive extract, and 65 kg of grape seed extract by mixing.

### Example C9

A composition was prepared from 60 kg of *Ceratonia siliqua* Linn. fruit extract, 10 kg of honey, 20 kg of American ginseng extract, 15 kg of olive extract, and 10 kg of grape seed extract by mixing.

### Example C10

A composition was prepared from 20 kg of *Ceratonia siliqua* Linn. fruit extract, 60 kg of honey, 10 kg of American ginseng extract, 30 kg of olive extract, and 25 kg of grape seed extract by mixing.

### Example C11

A composition was prepared from 40 kg of *Ceratonia siliqua* Linn. fruit extract, 20 kg of honey, 30 kg of American ginseng extract, 2 kg of olive extract, and 30 kg of grape seed extract by mixing.

### Example C12

A composition was prepared from 30 kg of *Ceratonia siliqua* Linn. fruit extract, 40 kg of honey, 15 kg of American ginseng extract, 10 kg of olive extract, and 20 kg of grape seed extract by mixing.

### Example C13

A composition was prepared from 10 kg of *Ceratonia siliqua* Linn. fruit extract, 20 kg of honey, 25 kg of American ginseng extract, 10 kg of cassia seed extract, and 25 kg of *Tribulus terrestris* extract by mixing.

### Example C14

A composition was prepared from 60 kg of *Ceratonia siliqua* Linn. fruit extract, 10 kg of honey, 20 kg of American ginseng extract, 15 kg of cassia seed extract, and 20 kg of *Tribulus terrestris* extract by mixing.

### Example C15

A composition was prepared from 30 kg of *Ceratonia siliqua* Linn. fruit extract, 60 kg of honey, 10 kg of American ginseng extract, 20 kg of cassia seed extract, and 15 kg of *Tribulus terrestris* extract by mixing.

### Example C16

A composition was prepared from 40 kg of *Ceratonia siliqua* Linn. fruit extract, 30 kg of honey, 30 kg of American ginseng extract, 2 kg of cassia seed extract, and 10 kg of *Tribulus terrestris* extract by mixing.

### Example C17

A composition was prepared from 20 kg of *Ceratonia siliqua* Linn. fruit extract, 40 kg of honey, 15 kg of American ginseng extract, 30 kg of cassia seed extract, and 5 kg of *Tribulus terrestris* extract by mixing.

### Example C18

Beverages, jams, candies, bee products, and/or meal replacement were obtained by taking any one of the compositions of Examples C1-C17, adding an auxiliary material which is acceptable in the food field as needed, and processing.

### Comparative Example C1

A composition was prepared from 10 kg of *Ceratonia siliqua* Linn. fruit extract, 50 kg of honey and 10 kg of American ginseng extract by mixing.

### Comparative Example C2

A composition was prepared from 10 kg of *Ceratonia siliqua* Linn. fruit extract, 50 kg of honey and 15 kg of Radix Astragali extract by mixing.

### Comparative Example C3

A composition was prepared from 30 kg of *Ceratonia siliqua* Linn. fruit extract, 40 kg of honey, 15 kg of American ginseng extract, 20 kg of grape seed extract and 10 kg of lily extract by mixing.

### Comparative Example C4

A composition was prepared from 30 kg of *Ceratonia siliqua* Linn. fruit extract, 40 kg of honey, 15 kg of American ginseng extract, 10 kg of olive extract, and 20 kg of chrysanthemum extract by mixing.

### Comparative Example C5

A composition was prepared from 30 kg of *Ceratonia siliqua* Linn. fruit extract, 60 kg of honey, 10 kg of American ginseng extract, 20 kg of Cassia seed extract, and 15 kg of chrysanthemum extract by mixing.

### Comparative Example C6

A composition was prepared from 30 kg of *Ceratonia siliqua* Linn. fruit extract, 60 kg of honey, 10 kg of American ginseng extract, 15 kg of *Tribulus terrestris* extract, and 20 kg of Fructus Lycii extract by mixing.

### Experimental Example C1: Experiment on anti-fatigue effect

### 1. Test samples

The compositions prepared in Examples C1-C17 and Comparative Examples C1-C2.

### 2. Experimental methods

Methods was carried out according to physical fatigue relieving experiments in the Technical Specification for Health Food Inspection and Evaluation (2003 Editi*on)* promulgated by the Ministry of Health in China. The feeding dose was 0.34 g/kg·bw.

### 3. Experimental results

3.1 The results of the load swimming experiments of the mice were shown in Table C1.

**Table C1: Load swimming experiments of the mice**

| Groups | Load swimming time (s) |
|---|---|
| Blank control group | 525.3±12.3 |
| Example C1 | 767.8±13.5*^{#} |
| Example C2 | 776.3±15.6*^{#} |
| Example C3 | 780.4±17.3*^{#} |
| Example C4 | 790.7±11.2*^{#} |
| Example C5 | 799.2±14.5*^{#} |
| Example C6 | 792.1±14.2*^{#} |
| Example C7 | 782.4±19.7*^{#} |
| Example C8 | 833.7±14.3*^{#} |
| Example C9 | 820.7±18.2*^{#} |
| Example C10 | 824.8±17.6*^{#} |
| Example C11 | 841.5±18.7*^{#} |
| Example C12 | 846.2±12.4*^{#} |
| Example C13 | 832.1±17.8*^{#} |
| Example C14 | 826.4±18.1*^{#} |
| Example C15 | 841.6±13.4*^{#} |
| Example C16 | 828.2±17.3*^{#} |
| Example C17 | 837.8±16.9*^{#} |
| Comparative Example C1 | 612.4±19.6 |
| Comparative Example C2 | 621.9±17.8 |

| | |
|---|---|
| Note: In comparison of Examples C1-C17 with the blank control group, # represents P<0.05. In comparison of Examples C1-C17 with the Comparative Example Cl and Comparative Example C2, * represents P<0.05. | |

3.2 Experimental results of influence on the blood lactic acid of the mice were shown in Table C2.

**Table C2: Influence on the blood lactic acid of the mice**

| Groups | Blood lactic acid (mmol/L) | | |
|---|---|---|---|
| | Before swimming | After swimming (0 min) | After swimming (20 min) |
| Blank control group | 2.26±0.3 | 6.22±1.2 | 4.23±0.7 |
| Example C1 | 2.45±0.4 | 5.39±1.6*^{#} | 4.11±0.3*^{#} |
| Example C2 | 2.37±0.1 | 5.31±1.1*^{#} | 4.02±0.6*^{#} |
| Example C3 | 2.42±0.9 | 5.23±1.7*^{#} | 3.91±0.5*^{#} |
| Example C4 | 2.31±0.8 | 4.92±1.3*^{#} | 3.77±0.4*^{#} |
| Example C5 | 2.51±0.5 | 4.88±1.1*^{#} | 3.39±0.9*^{#} |
| Example C6 | 2.46±0.7 | 4.94±1.7*^{#} | 3.56±0.2*^{#} |
| Example C7 | 2.65±0.3 | 5.09±1.2*^{#} | 3.95±0.8*^{#} |
| Example C8 | 2.41±0.6 | 4.06±1.3*^{#} | 2.87±0.6*^{#} |
| Example C9 | 2.53±0.3 | 4.31±1.7*^{#} | 3.11±0.7*# |
| Example C10 | 2.57±0.8 | 3.91±1.4*^{#} | 2.83±1.3*^{#} |
| Example C11 | 2.48±0.7 | 4.18±1.8*^{#} | 2.96±0.6*^{#} |
| Example C12 | 2.62±0.2 | 3.87±1.7*^{#} | 2.71±0.3*^{#} |
| Example C13 | 2.54±0.2 | 4.09±1.9*^{#} | 3.03±0.5*^{#} |
| Example C14 | 2.39±0.8 | 4.22±1.3*^{#} | 3.17±1.1*^{#} |
| Example C15 | 2.52±0.1 | 3.93±1.2*^{#} | 2.81±0.9*^{#} |
| Example C16 | 2.43±0.9 | 4.13±1.5*^{#} | 3.08±0.8*^{#} |
| Example C17 | 2.63±0.4 | 4.02±1.6*^{#} | 2.94±0.4*^{#} |
| Comparative Example C1 | 2.46±0.5 | 6.01±1.0 | 4.23±1.5 |
| Comparative Example C2 | 2.76±0.6 | 5.90±1.6 | 4.14±1.4 |

| | | | |
|---|---|---|---|
| Note: In comparison of Examples C1-C17 with the blank control group, # represents P<0.05. In comparison of Examples C1-C17 with the Comparative Example Cl and Comparative Example C2, * represents P<0.05. | | | |

3.3 The results of influence on the liver glycogen of the mice were shown in Table C3.

**Table C3: Influence on the liver glycogen of the mice**

| Groups | Liver glycogen (mg/g) |
|---|---|
| Blank control group | 16.56±5.42 |
| Example C1 | 18.23±6.32*^{#} |
| Example C2 | 18.35±4.38*^{#} |
| Example C3 | 18.46±3.92*^{#} |
| Example C4 | 19.23±3.51*^{#} |
| Example C5 | 19.64±3.64*^{#} |
| Example C6 | 19.45±3.78*^{#} |
| Example C7 | 18.97±4.92*^{#} |
| Example C8 | 20.37±3.71*^{#} |
| Example C9 | 19.83±6.42*^{#} |
| Example C10 | 20.64±5.65*^{#} |
| Example C11 | 20.15±5.31*^{#} |
| Example C12 | 21.03±4.98*^{#} |
| Example C13 | 20.21±3.64*^{#} |
| Example C14 | 19.63±4.19*^{#} |
| Example C15 | 20.89±5.32*^{#} |
| Example C16 | 19.86±4.57*^{#} |
| Example C17 | 20.62±4.86*^{#} |
| Comparative Example C1 | 17.65±3.21 |
| Comparative Example C2 | 17.99±5.43 |

| | |
|---|---|
| Note: In comparison of Examples C1-C17 with the blank control group, # represents P<0.05. In comparison of Examples C1-C17 with the C1 and Comparative Example C2, * represents P<0.05. | |

The results of Table C1, Table C2 and Table C3 showed that, in the case of the same amount of the effective ingredients have, the compositions of Examples C1-C17 exhibited an excellent anti-fatigue effect significantly superior to the compositions of the Comparative Examples C1 and C2, and the four ingredients of *Ceratonia siliqua* Linn. fruit extract, honey, American ginseng extract, and Radix Astragali extract had synergistic effect in anti-fatigue. When the Radix Astragali extract was replaced with olive extract and grape seed extract, or the Radix Astragali extract was replaced with Cassia seed extract and *Tribulus terrestris* extract, the anti-fatigue function could be further enhanced, and the effect was remarkable.

### Experimental Example C2: Experiment on immunity enhancing effect

### 1. Test samples

The compositions prepared in Examples C1-C17 and Comparative Examples C1-C2.

### 2. Experimental methods

The Experiment was carried out according to physical fatigue relieving experiments in the Technical Specification for Health Food Inspection and Evaluation (2003 Editi*on)* promulgated by the Ministry of Health in China. The feeding dose was 0.34 g/kg·bw.

### 3. Experimental results

3.1 The results of influence on lymphocyte transformation of the mice were shown in Table C4.

**Table C4**

| Groups | Optical density difference |
|---|---|
| Blank control group | 1.45±0.04 |
| Example C1 | 2.03±0.04*^{#} |
| Example C2 | 2.11±0.08*^{#} |
| Example C3 | 2.15±0.07*^{#} |
| Example C4 | 2.24±0.05*^{#} |
| Example C5 | 2.51±0.06*^{#} |
| Example C6 | 2.31±0.03*^{#} |
| Example C7 | 2.18±0.02*^{#} |
| Example C8 | 2.74±0.04*^{#} |
| Example C9 | 2.67±0.06*^{#} |
| Example C10 | 2.76±0.03*^{#} |
| Example C11 | 2.71±0.07*^{#} |
| Example C12 | 2.83±0.08*^{#} |
| Example C13 | 2.69±0.07*^{#} |
| Example C14 | 2.58±0.04*^{#} |
| Example C15 | 2.78±0.05*^{#} |
| Example C16 | 2.63±0.09*^{#} |
| Example C17 | 2.74±0.03^{*#} |
| Comparative Example C1 | 1.96±0.09 |
| Comparative Example C2 | 1.57±0.08 |

| | |
|---|---|
| Note: In comparison of Examples C1-C17 with the blank control group, # represents P<0.05. In comparison of Examples C1-C17 with the Comparative Example C1 and Comparative Example C2, * represents P<0.05. | |

3.2 The results of influence on the NK cell activity of the mice were shown in Table C5.

**Table C5: Determination of NK cell activity (,x±s)**

| Groups | NK cell activity rate (%) |
|---|---|
| Blank control group | 20.1±0.6 |
| Example C1 | 22.5±0.5*^{#} |
| Example C2 | 23.6±0.2*^{#} |
| Example C3 | 24.2±0.8*^{#} |
| Example C4 | 25.4±0.5*^{#} |
| Example C5 | 27.H0.6*^{#} |
| Example C6 | 26.9±0.1*^{#} |
| Example C7 | 24.7±0.3*^{#} |
| Example C8 | 28.1±0.6*^{#} |
| Example C9 | 27.4±0.7*^{#} |
| Example C10 | 28.6±0.3*^{#} |
| Example C11 | 27.8±0.7*^{#} |
| Example C12 | 29.8±0.8*^{#} |
| Example C13 | 27.6±0.6*^{#} |
| Example C14 | 27.3±0.9*^{#} |
| Example C15 | 29.5±0.4*^{#} |
| Example C16 | 27.3±0.5*^{#} |
| Example C17 | 28.2±0.3*^{#} |
| Comparative Example C1 | 21.1±0.9 |
| Comparative Example C2 | 20.3±0.6 |

| | |
|---|---|
| Note: In comparison of Examples C1-C17 with the blank control group, # represents P<0.05. In comparison of Examples C1-C17 with the Comparative Example C1 and Comparative Example C2, * represents P<0.05. | |

The results of Table C4 and Table C5 showed that, each Example group could significantly improve the lymphocyte proliferation ability and NK cell activity of the normal mice, indicating that the compositions of the present invention have the effects of improving the immunity of the body and enhancing the disease resistance of the body. The four ingredients of *Ceratonia siliqua* Linn. fruit extract, honey, American ginseng extract, and Radix Astragali extract have synergistic effect in enhancing immunity. When the Radix Astragali extract was replaced with olive extract and grape seed extract, or the Radix Astragali extract was replaced with Cassia seed extract and *Tribulus terrestris* extract, the immunity could be further improved, and the effect was remarkable.

### Experimental Example C3: Experiment on throat-clearing effect

### 1. Test samples

The compositions prepared in Examples C8-C12 and Comparative Examples C3-C4.

### 2. Experimental methods

The experiment was carried out according to experiments on throat-clearing function (cotton ball implantation experiments of rats) in the Technical Specification for Health Food Inspection and Evaluation (2003 Editi*on)* promulgated by the Ministry of Health in China. The feeding dose was 0.17 g/kg·bw.

### 3. Experimental results

**Table C6: Influence on body weight of the rats**

| Groups | Initial weight/g | Final weight/g | Increase/g |
|---|---|---|---|
| Blank control group | 171.2 | 334.1 | 162.9 |
| Example C8 | 170.6 | 333.7 | 163.1 |
| Example C9 | 171.3 | 332.4 | 161.1 |
| Example C10 | 172.1 | 332.6 | 160.5 |
| Example C11 | 171.7 | 332.7 | 161.0 |
| Example C12 | 171.4 | 334.3 | 162.9 |
| Comparative Example C3 | 170.9 | 333.9 | 163.0 |
| Comparative Example C4 | 172.3 | 333.4 | 161.1 |

**Table C7: Experimental results of cotton ball implantation of the rats**

| Groups | Number of animals | Granuloma net weight/g |
|---|---|---|
| Blank control group | 10 | 0.074±0.021 |
| Example C8 | 10 | 0.053±0.024*^{#} |
| Example C9 | 10 | 0.061±0.027*^{#} |
| Example C10 | 10 | 0.047±0.031*^{#} |
| Example C 11 | 10 | 0.058±0.026*^{#} |
| Example C12 | 10 | 0.042±0.028*^{#} |
| Comparative Example C3 | 10 | 0.071±0.029 |
| Comparative Example C4 | 10 | 0.067±0.033 |

| | | |
|---|---|---|
| Note: In comparison of Examples C8-C12 with the blank control group, # represents P<0.05. In comparison of Examples C8-C12 with the Comparative Example C3 and Comparative Example C4, * represents P<0.05. | | |

It can be seen from Table C6 that, there was no statistically significant difference in the initial body weight and the final body weight of the rats in each dose group, indicating that the growth and development of the rats in each group were good. The results in Table C7 showed that, compared with the blank control group, the net weight of cotton ball granuloma of the rats in each Experimental group was significantly decreased (P<0.05), and the throat-clearing effect was observed in Examples C8-C12.

### Experimental Example C4: Experiment on eyesight improving (visual fatigue relieving) effect

### 1. Test samples

The compositions prepared in Examples C13-C17 and Comparative Examples C5-6.

### 2. Experimental methods

According to visual fatigue relieving experiments in the Technical Specification for Health Food Inspection and Evaluation (2003 Editi*on)* promulgated by the Ministry of Health in China. The human experimental feeding dose was 0.034 g/kg·bw.

### 3. Experimental results

**Table C8: Alleviation of symptoms**

| Symptoms | | Number of cases | Ineffective | Effective | Alleviation rate% |
|---|---|---|---|---|---|
| Eye swelling | Blank control group | 50 | 46 | 4 | 8 |
| | Example C13 | 50 | 12 | 38 | 76 |
| | Example C14 | 50 | 15 | 35 | 70 |
| | Example C15 | 50 | 6 | 44 | 88 |
| | Example C16 | 50 | 13 | 37 | 74 |
| | Example C17 | 50 | 10 | 40 | 80 |
| | Comparative Example C5 | 50 | 37 | 13 | 26 |
| | Comparative Example C6 | 50 | 30 | 20 | 40 |
| Eye pain | Blank control group | 50 | 50 | 0 | 0 |
| | Example C13 | 50 | 16 | 34 | 68 |
| | Example C14 | 50 | 21 | 29 | 58 |
| | Example C15 | 50 | 13 | 37 | 74 |
| | Example C16 | 50 | 18 | 32 | 64 |
| | Example C17 | 50 | 15 | 35 | 70 |
| | Comparative Example C5 | 50 | 42 | 8 | 16 |
| | Comparative Example C6 | 50 | 37 | 13 | 26 |
| Photopho bia | Blank control group | 50 | 50 | 0 | 0 |
| | Example C13 | 50 | 19 | 31 | 62 |
| | Example C14 | 50 | 23 | 27 | 54 |
| | Example C15 | 50 | 16 | 34 | 68 |
| | Example C16 | 50 | 22 | 28 | 56 |
| | Example C17 | 50 | 18 | 32 | 64 |
| | Comparative Example C5 | 50 | 45 | 5 | 10 |
| | Comparative Example C6 | 50 | 39 | 11 | 22 |
| Blurred vision | Blank control group | 50 | 47 | 3 | 6 |
| | Example C13 | 50 | 17 | 33 | 66 |
| | Example C14 | 50 | 20 | 30 | 60 |
| | Example C15 | 50 | 12 | 38 | 76 |
| | Example C16 | 50 | 18 | 32 | 64 |
| | Example C17 | 50 | 16 | 34 | 68 |
| | Comparative Example C5 | 50 | 42 | 8 | 16 |
| | Comparative | 50 | 36 | 14 | 28 |
| | Example C6 | | | | |
| Dry eyes | Blank control group | 50 | 45 | 5 | 10 |
| | Example C13 | 50 | 9 | 41 | 82 |
| | Example C14 | 50 | 11 | 39 | 78 |
| | Example C15 | 50 | 4 | 46 | 92 |
| | Example C16 | 50 | 10 | 40 | 80 |
| | Example C17 | 50 | 7 | 43 | 86 |
| | Comparative Example C5 | 50 | 38 | 12 | 24 |
| | Comparative Example C6 | 50 | 29 | 21 | 42 |

**Table C9: Comparison and changes in visuognosis persistence before and after the experiment**

| Groups | Number of cases | Before experiment % | After experiment% | Improvement rate% |
|---|---|---|---|---|
| Blank control group | 50 | 51.31±5.31 | 52.45±6.41 | 1.14 |
| Example C13 | 50 | 52.57±6.71 | 74.19±8.37*^{#} | 21.62 |
| Example C14 | 50 | 51.49±6.24 | 70.48±8.69*^{#} | 18.99 |
| Example C15 | 50 | 53.72±7.93 | 81.72±8.93*^{#} | 28.00 |
| Example C16 | 50 | 52.13±5.04 | 72.96±9.05*^{#} | 20.83 |
| Example C17 | 50 | 55.47±6.79 | 78.46±7.62*^{#} | 22.99 |
| Comparative Example C5 | 50 | 50.64±5.33 | 54.04±9.13 | 3.40 |
| Comparative Example C6 | 50 | 53.39±7.06 | 58.71±8.39 | 5.32 |

| | | | | |
|---|---|---|---|---|
| Note: In comparison of Examples C13-C17 with the blank control group, # represents P<0.05. In comparison of Examples C13-C17 with the Comparative Example C5 and Comparative Example C6, * represents P<0.01. | | | | |

It can be seen from Table C8 and Table C9 that, each group of Examples C13-C17 had a significant effect of alleviating symptoms, and the visuognosis persistence was much greater than 10%, by which it can be judged that the test samples have the function of relieving visual fatigue.

Unless otherwise specified, the *Ceratonia siliqua* Linn. fruit extract and the cactus extract in the following Examples and Comparative Examples were prepared by the methods as follows:
The *Ceratonia siliqua* Linn. fruit extract was prepared by: separating the seeds and the pericarps of the *Ceratonia siliqua* Linn. fruit, drying the pericarps at 40°C for 1 day, cutting into pieces having an average particle size of 0.5 to 1.0 cm, mixing the dried and cut pericarps of the *Ceratonia siliqua* Linn. fruit with water, extracting at 45°C for 2 h with an extracting solvent ratio of water: pericarps (v/w) = 2.27:1, separating the extract and the solid phase by centrifugal separation, and concentrating by rotary evaporation to a sugar degree approximate to 66.5 degree.

The cactus extract was prepared by: washing the cladodes of cactus, peeling, slicing, baking, pulverizing, mixing with water at a ratio of the cactus raw material to water of 1:15, performing ultrasonic extraction at 90°C for 1.5 h to obtain an extract solution, and spray drying to obtain a cactus extract.

### Example D1

A *Ceratonia siliqua* Linn. fruit composition consisted of the following ingredients: *Ceratonia siliqua* Linn. fruit extract 99 kg, and cactus extract 1 kg.

### Example D2

A *Ceratonia siliqua* Linn. fruit composition consisted of the following ingredients: *Ceratonia siliqua* Linn. fruit extract 90 kg, and cactus extract 10 kg.

### Example D3

A *Ceratonia siliqua* Linn. fruit composition consisted of the following ingredients: *Ceratonia siliqua* Linn. fruit extract 83 kg, and cactus extract 17 kg.

### Example D4

A *Ceratonia siliqua* Linn. fruit composition consisted of the following ingredients: *Ceratonia siliqua* Linn. fruit extract 75 kg, and cactus extract 25 kg.

### Example D5

A *Ceratonia siliqua* Linn. fruit composition consisted of the following ingredients: *Ceratonia siliqua* Linn. fruit extract 67 kg, and cactus extract 33 kg.

### Example D6

A *Ceratonia siliqua* Linn. fruit composition consisted of the following ingredients: *Ceratonia siliqua* Linn. fruit extract 60 kg, and cactus extract 40 kg.

### Example D7

A *Ceratonia siliqua* Linn. fruit composition was prepared by directly pulverizing the pericarp of *Ceratonia siliqua* Linn. fruit and the cactus raw material, and mixing, wherein the mass ratio of the pericarp of *Ceratonia siliqua* Linn. fruit to the cactus raw material was 99:1.

### Example D8

A *Ceratonia siliqua* Linn. fruit composition consisted of the following ingredients: *Ceratonia siliqua* Linn. fruit extract 99 kg, and cactus extract 1 kg.

The *Ceratonia siliqua* Linn. fruit extract was prepared by the following method: mixing the dried and pulverized pericarp of *Ceratonia siliqua* Linn. fruit with water, extracting at 25°C for 2 h to obtain an extract solution, centrifuging to obtain a supernatant, and concentrating to a sugar degree of 66.5 degree to obtain a *Ceratonia siliqua* Linn. fruit extract.

### Comparative Example D1

Comparative Example D1 was a *Ceratonia siliqua* Linn. fruit extract.

### Comparative Example D2

Comparative Example D2 was a cactus extract.

### Comparative Example D3

A *Ceratonia siliqua* Linn. fruit composition consisted of the following ingredients: *Ceratonia siliqua* Linn. fruit extract 1 kg, and cactus extract 99 kg.

### Comparative Example D4

A *Ceratonia siliqua* Linn. fruit composition consisted of the following ingredients: *Ceratonia siliqua* Linn. fruit extract 150 kg, and cactus extract 1 kg.

### Comparative Example D5

A *Ceratonia siliqua* Linn. fruit composition consisted of the following ingredients: *Ceratonia siliqua* Linn. fruit extract 99 kg, and vitamin E 1 kg.

### Comparative Example D6

A *Ceratonia siliqua* Linn. fruit composition consisted of the following ingredients: *Ceratonia siliqua* Linn. fruit extract 99 kg, and grape seed extract 1 kg.

### Comparative Example D7

A *Ceratonia siliqua* Linn. fruit composition consisted of the following ingredients: *Ceratonia siliqua* Linn. fruit extract 99 kg, cactus extract 0.5 kg, and grape seed extract 0.5 kg.

### Experimental Example D1: Anti-oxidation properties of the compositions

Animals: 25 to 30 g Kunming species, 330 healthy male mice were randomly grouped, 10 mice in each group.

An animal oxidative damage model was constructed by D-galactose intraperitoneal injection treatment, and the *in vivo* anti-oxidation test of the compositions of the above Examples and Comparative Examples in mice was carried out. Except for the blank control group, the rest groups were injected with D-galactose for modeling, the injection dose was 1.0 g/(kg·bw) once a day, and continuous injection was performed for 6 weeks. After successful modeling, administration was carried out according to the following doses:
Blank control group: equal amount of distilled water;
Model control group: equal amount of distilled water;
Positive control group: vitamin E in a dose of 0.2 g/(kg • bw);

Each experimental group: the compositions of Examples D1-D8 and Comparative Examples D1-D7 in a dose of 0.83 g/(kg•bw).

After continuous intragastric administration for 30 days, the experiment was stopped, eyeballs of the mice were removed and blood was collected to determine the activity of superoxide dismutase (SOD) in serum. The results were shown in Table D1.

In order to analyze the anti-oxidation stability of the compositions, the compositions of Examples D1-D8 and Comparative Examples D1-D7 were placed in a light and oxygen gas environment for 90 days, the test mice were intragastrically administered by the method described above, and the activity of SOD in serum of the mice was detected. The results were shown in Table D1.

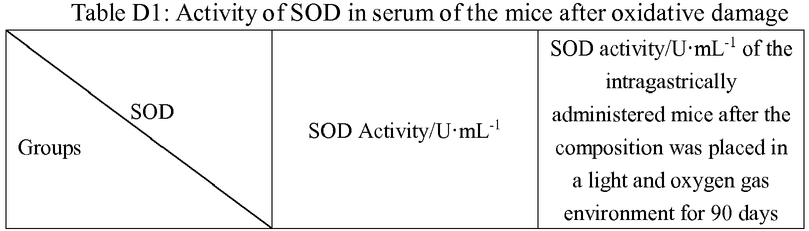

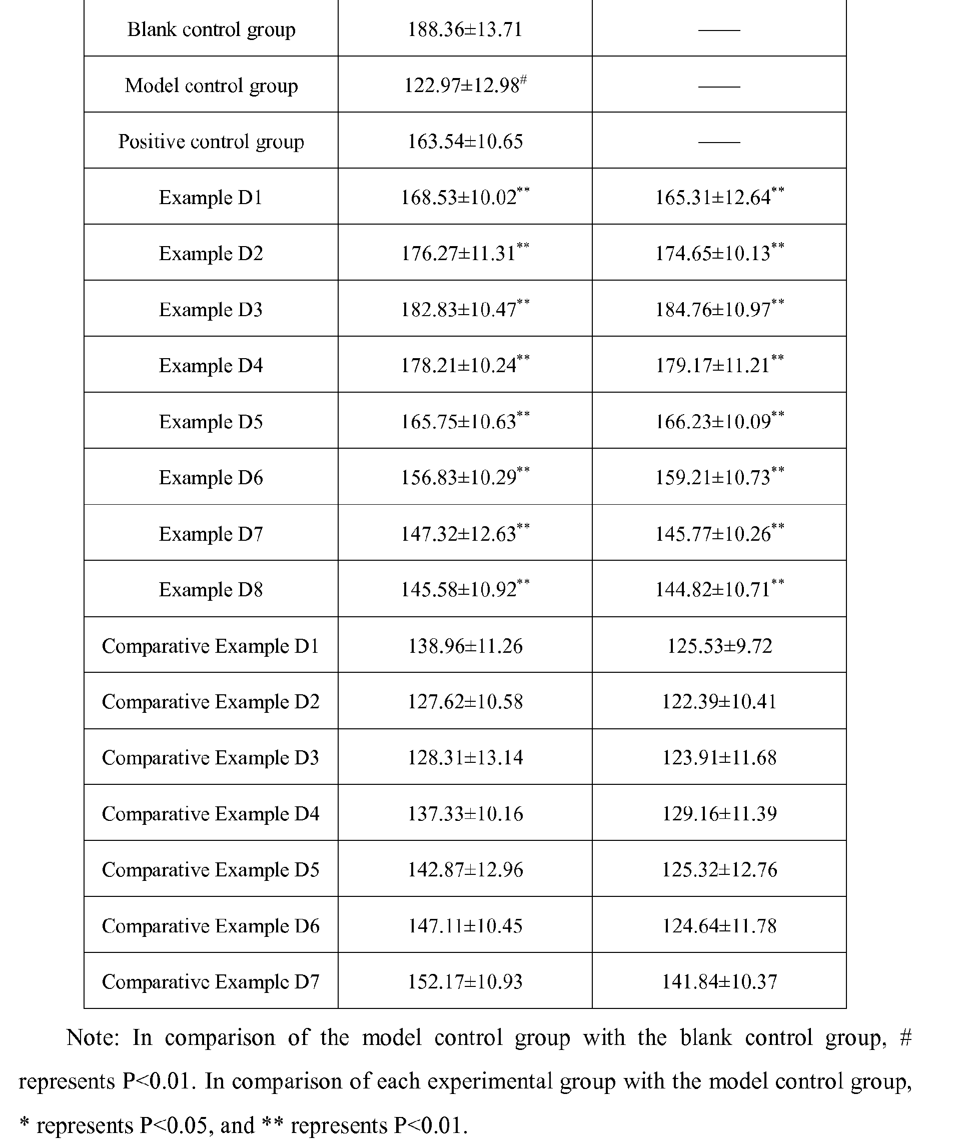

It can be seen from Table D1 that, the activity of SOD in serum of the mice of the model control group was significantly lower than that of the blank control group (P<0.01), indicating that the D-galactose oxidative damage model was successfully established. The health care compositions of *Ceratonia siliqua* Linn. fruit of Examples D1-D8 were used for intragastric administration, the SOD content of the oxidative damage model mice was significantly increased compared with the model control group (P<0.01), wherein the SOD activity of the mice treated with the Example D3 which has the best antioxidative effect was basically restored to the level of normal mice without oxidative damage, and the antioxidative effects of the health care compositions of *Ceratonia siliqua* Linn. fruit of Examples D1-D6 were even significantly higher than or equivalent to the commonly used antioxidant vitamin E (positive control group).

In terms of the stability of the anti-oxidation properties, the anti-oxidation properties of the *Ceratonia siliqua* Linn. fruit compositions of Examples D1-D8 did not significantly decrease after standing in a light and oxygen gas atmosphere for 90 days.

The results show that the health care compositions prepared from the *Ceratonia siliqua* Linn. fruit extract and the cactus extract could significantly increase the activity of SOD in the body, thereby promoting the scavenging of oxygen free radicals, and achieving a good antioxidative effect. Moreover, the health care composition prepared from the *Ceratonia siliqua* Linn. fruit extract and the cactus extract had relatively high stability, and could effectively and stably exert anti-oxidation properties.

### Experimental Example D2: Effect on reducing Blood lipid of the compositions

Animals: SD rats, weighing 200±20 g, 50 rats were randomly grouped, 10 rats in each group. A mixture of 2% cholesterol, 10% lard, 0.5% bile salt, 0.2% methylthiouracil, and 87.3% basic feeds was used as a high-fat feed. Except that the blank control group was fed with 25 g of basic feeds every day, the rest groups were fed with 20 g of the high-fat feed every day, and continuous feeding was performed for three weeks for modeling. After successful modeling, the rats were fed as follows:
Blank control group: basic feeds and distilled water;
Model control group: the high-fat feed and distilled water;
Low dose group: the high-fat feed and the composition of Example D3 at a low dose of 0.83 g/(kg•bw);
Medium dose group: the high-fat feed and the composition of Example D3 at a medium dose of 1.67 g/(kg•bw);
High dose group: the high-fat feed and the composition of Example D3 at a high dose of 5 g/(kg•bw);

After three weeks of continuous feeding, fasting was performed for 12 hours without restraining the water, and the blood was collected by eyeball extirpating to detect total cholesterol (TC) and triglyceride (TG). The results were shown in Table D2.

**Table D2: Influence of the compositions on blood lipids of rats**

| Groups | TC | TG |
|---|---|---|
| Blank control group | 1.62±0.12 | 0.37±0.12 |
| Model control group | 8.52±0.97 | 0.93±0.23 |
| Low dose group | 5.32±0.64** | 0.68±0.17** |
| Medium dose group | 4.68±0.31** | 0.61±0.1** |
| High dose group | 2.89±0.42** | 0.53±0.16** |

| | | |
|---|---|---|
| Note: In comparison with the model control group, ** represents P<0.01. | | |

The results showed that the TC and TG in the blood could be significantly reduced by feeding the compositions prepared from *Ceratonia siliqua* Linn. fruit and cactus (Take Example D3 as an example), and the effect on reducing blood lipid of the compositions was significant.

### Experimental Example D3: Blood-glucose regulating function of the compositions

### 1. Effect on reducing blood-glucose

Animal: Kunming mice weighing 26±2 g. Ten healthy male mice were randomly selected as a blank control group.

Except for the blank control group, after 24 hours of fasting, the rest mice were administrated with alloxan in a dose of 40 mg/kg bw for modeling. After 5 days, fasting was performed for 12 hours, blood-glucose was measured, body weight, food intake, and water intake were recorded for comparison. A high blood-glucose model had a blood-glucose level of 11.1 mmol/L or more. The mice as the high blood-glucose models were grouped, 10 mice in each group.
Blank control group: saline was intragastrically administered in a dose of 0.2 ml/(kg•bw);
Model control group: saline was intragastrically administered in a dose of 0.2 ml/(kg•bw);
Low dose group: the composition of Example D3 in a low dose of 0.83 g/(kg•bw);
Medium dose group: the composition of Example D3 in a medium dose of 1.67 g/(kg·bw);
High dose group: the composition of Example D3 in a high dose of 5 g/(kg•bw). Intragastric administration was performed once a day for 30 days.

The blood-glucose levels of the mice before and after the test were measured, and the results were shown in Table D3.

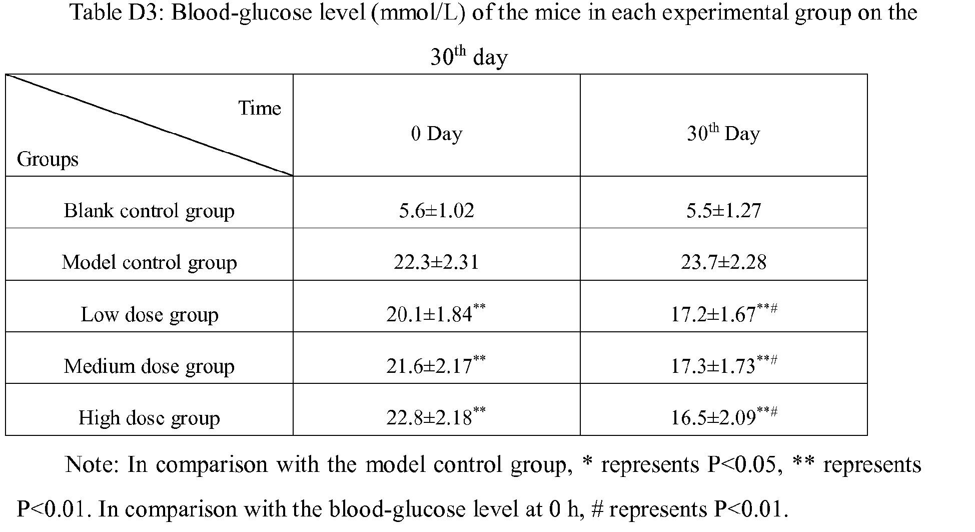

It can be seen from the above table that, the model control group had a significant increase in blood-glucose compared with the blank control group, and the symptoms of polydipsia, polyphagia and emaciation appeared. The diabetic animal model was successfully established. The blood-glucose levels of the low dose group, the medium dose group and the high dose group were significantly lower than that of the model control group, indicating that the compositions prepared from *Ceratonia siliqua* Linn. fruit and cactus had effects on reducing blood-glucose.

### 2. Blood-glucose increasing function

Animal: Kunming mice weighing 26±2 g. Ten healthy male mice were randomly selected as a blank control group.

Diabetic mice were selected and fasted for 24 hours, fasting blood-glucose was measured, 40 mice with blood-glucose level below 2.8 mmol/L were selected and randomly divided into 4 groups (model control group, low dose group, medium dose group, and high dose group), and administration was carried out according to the following doses:
Blank control group: saline was intragastrically administered in a dose of 0.2 ml/(kg·bw);
Model control group: saline was intragastrically administered in a dose of 0.2 ml/(kg•bw);
Low dose group: the composition of Example D3 in a low dose of 0.83 g/(kg•bw);
Medium dose group: the composition of Example D3 in a medium dose of 1.67 g/(kg•bw);
High dose group: the composition of Example D3 in a high dose of 5 g/(kg•bw).

20 minutes after administration, the mice were orally administered with glucose 2 g/kg. Blood-glucose levels were measured 0.5 h, 1 h, and 2 h after glucose administration. The results were shown in Table D4.

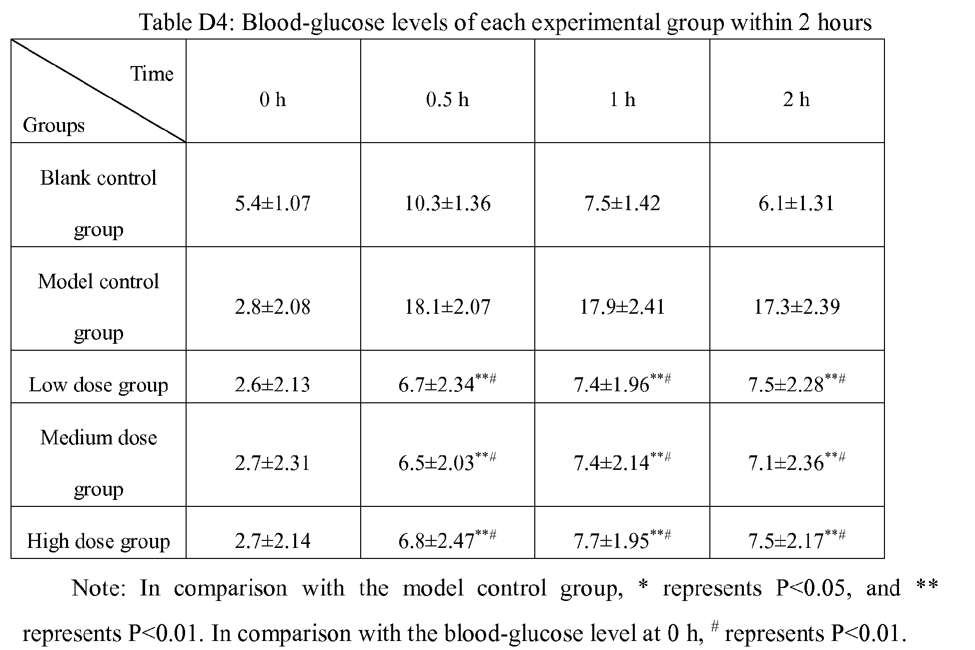

It can be seen from Table D4 that, in the low dose group, medium dose group and high dose group, the increase of blood-glucose in the diabetic mice was slowed down after administration, but there was no significant difference among the low, medium, and high dose groups. It can be seen that the composition prepared from *Ceratonia siliqua* Linn. fruit and cactus can not only replenish energy and restore blood-glucose, but also make the blood-glucose of diabetic patients not rise too fast. Meanwhile, when the blood-glucose level is too high, the composition will also play the function of reducing blood-glucose, and has good blood-glucose regulating function.

In the following Examples and Comparative Examples, the preparation methods of the extract of the pericarp of *Ceratonia siliqua* Linn. fruit and the cactus extract were as follows unless otherwise specified:
(1) Preparation of an extract of the pericarp of *Ceratonia siliqua* Linn. fruit: extraction was carried out at 45°C for 2 h at an extracting solvent ratio of water : pericarp (v/w) = 2.27:1, the extract was separated from the solid phase by centrifugal separation, and concentrated by rotary evaporation to a sugar degree approximate to 66.5 degree to obtain an extract of the pericarp of *Ceratonia siliqua* Linn. fruit.
(2) Preparation of a cactus extract: cactus was washed, peeled, sliced, oven dried, pulverized, mixed with water at a ratio of cactus: water (w/v) = 1:15, extracted at 90°C for 1.5 h, and filtered to obtain an extract solution, and the extract solution was spray dryed to obtain a cactus extract.

### Example E1

A bee feed, with a formulation as follows: *Ceratonia siliqua* Linn. fruit pericarp extract 99 kg, and cactus extract 1 kg.

The preparation method of a bee feed was as follows: the *Ceratonia siliqua* Linn. fruit pericarp extract and the cactus extract were uniformly mixed, filled, packaged under central control to obtain a bee feed.

### Example E2

A bee feed, with a formulation as follows: *Ceratonia siliqua* Linn. fruit pericarp extract 90 kg, and cactus extract 10 kg.

The preparation method of the bee feed was the same as the Example E1.

### Example E3

A bee feed, with a formulation as follows: *Ceratonia siliqua* Linn. fruit pericarp extract 80 kg, and cactus extract 20 kg.

The preparation method of the bee feed was the same as the Example E1.

### Example E4

A bee feed, with a formulation as follows: *Ceratonia siliqua* Linn. fruit pericarp extract 70 kg, and cactus extract 30 kg.

The preparation method of the bee feed was the same as the Example E1.

### Example E5

A bee feed, with a formulation as follows: *Ceratonia siliqua* Linn. fruit pericarp extract 60 kg, and cactus extract 40 kg.

The preparation method of the bee feed was the same as the Example E1.

### Comparative Example E1

The bee feed of Comparative Example E1 was pollen nectar.

### Comparative Example E2

The bee feed of Comparative Example E2 was a cactus extract.

### Comparative Example E3

The bee feed of Comparative Example E3 was a *Ceratonia siliqua* Linn. fruit pericarp extract.

### Comparative Example E4

A bee feed, with a formulation as follows: soybean powder 70 kg, and cactus extract 30 kg.

### Comparative Example E5

A bee feed, with a formulation as follows: *Ceratonia siliqua* Linn. fruit pericarp extract 70 kg, and white sugar 30 kg.

### Comparative Example E6

A bee feed, with a formulation as follows: *Ceratonia siliqua* Linn. fruit pericarp extract 72 kg, cactus extract 8 kg, and pollen nectar 20 kg.

### Experimental Example E1: Feeding test of bee feeds

Four groups of Chinese bees with the same population were selected, and a queen excluder was used to control spawning of the queen bee. The sealed brood in which the bees were about to emerge was placed in a constant temperature and humidity chamber (34°C, relative humidity 75%) for eclosion. The newly emerged 1-day old worker bees were equally divided into 11 groups with 5 replicates in each group and about 50 bees per replicate, and placed in a constant temperature and humidity chamber (34°C, relative humidity 75%) for continue feeding. The 11 groups were fed with the bee feeds prepared in Examples E1-E5 and Comparative Examples E1-E6, respectively. The feed was replaced once every 24 hours to ensure sufficient feed. The dead bees were removed 24 hours after the first feeding, and then the number of dead bees per day was counted and the dead bees were removed in time until all the bees died.

After the bee feeds of Examples E1-E5 and Comparative Examples E1-E6 were placed in a light and oxygen gas environment for 30 days, the bees were fed in the same manner as above.

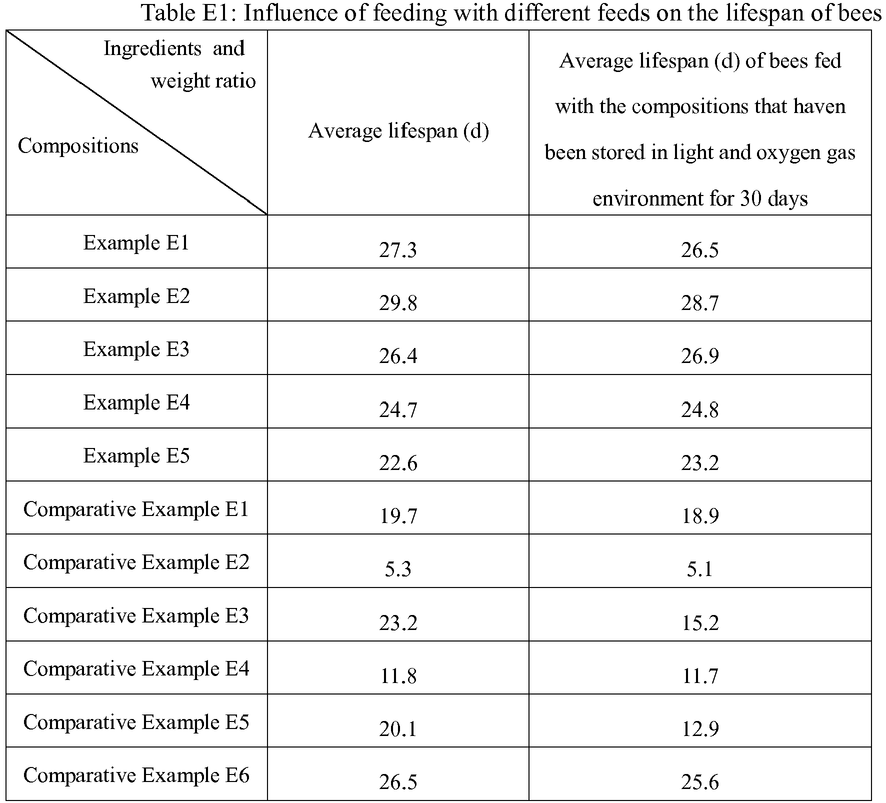

The results of feeding with the bee feeds were shown in Table E1. The results showed that when the bees were fed with cactus only, the bees did not like to eat, and the nutrition was not enough, resulting in a very short lifespan of the bees. The lifespan of the bees that were fed with the *Ceratonia siliqua* Linn. fruit pericarp extract only was relatively short, too. However, when the bees were fed with the feeds prepared from the mixture of the *Ceratonia siliqua* Linn. fruit pericarp extract and the cactus extract, the bees liked to eat, and the lifespan of the bees could be significantly improved. Compared with the commonly used bee feeds of pollen nectar, after feeding the bees with the feeds provided by the present invention, the lifespan of the bees was prolonged by up to 10 days, that is, prolonged by 50%. It can be seen that the feeding effect was even better than that of pollen nectar feed, indicating that the feeds provided by the present invention have the health care function of improving immunity of bees, reducing morbidity of bees and prolonging lifespan of bees, thus ensuring the quality of the honey produced by bees.

### Experimental Example E2: Determination of the composition of honey

The composition of honey was determined based on the honey production of the bees raised in Experimental Example E1, and the results were shown in Table E2.

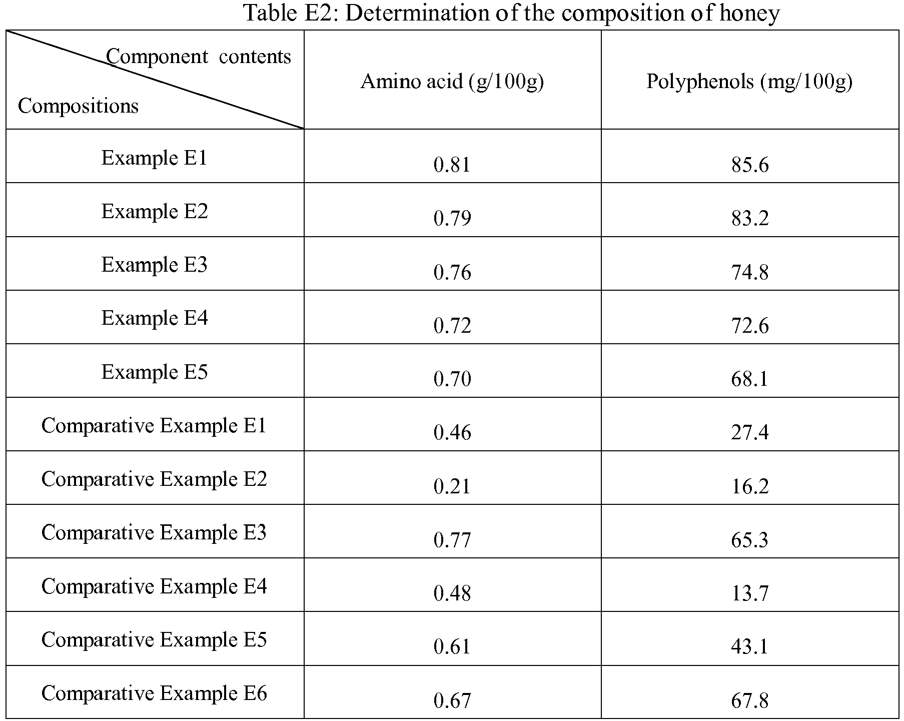

It can be seen from Table E2 that the contents of polyphenols and amino acid of honey produced by the bees were significantly increased by feeding the bees with the feeds prepared from the mixture of the *Ceratonia siliqua* Linn. fruit pericarp extract and the cactus extract, and the quality of honey was improved.

### Industrial applicability

The present invention discloses a *Ceratonia siliqua* Linn. fruit composition, and also discloses preparation method and application thereof. The composition of the present invention mainly uses the *Ceratonia siliqua* Linn. fruit extract as a main raw material, can provide sufficient nutrients, has various effects, is convenient and safe to eat, and has extremely high marketing promotional value. The present invention has broad application prospects and good industrial applicability in the technical fields of medicine health care, animal feeds and the like.

Although the present invention has been described in detail above with the aid of general description, specific embodiments and experiments, some modifications or improvements can be made on the basis of the present invention, which is obvious to a person skilled in the art. Therefore, the modifications or improvements made on the basis of not deviating from the spirit of the present invention belong to the scope of protection required by the present invention.

## Claims

1. A *Ceratonia siliqua* Linn. fruit composition, comprising a *Ceratonia siliqua* Linn. fruit extract, and further comprising any group of the following ingredients:
a) honey;
b) cactus extract, honey and Noni Puree;
c) honey, American ginseng extract, and Radix Astragali extract.

2. The composition according to claim 1, wherein the *Ceratonia siliqua* Linn. fruit extract is an aqueous extract of the pericarp of the *Ceratonia siliqua* Linn. fruit from which the seeds have been removed; preferably, the sugar degree of the *Ceratonia siliqua* Linn. fruit extract is 65 to 75 degree; and/or, the extraction temperature during preparation of the *Ceratonia siliqua* Linn. fruit extract is 40 to 50°C;
further preferably, the method for preparing the *Ceratonia siliqua* Linn. fruit extract comprises: drying the pericarp of the *Ceratonia siliqua* Linn. fruit from which the seeds have been removed, crushing to an average particle diameter of 0.5 to 1.0 cm, adding 1.5 to 4 times of water by weight, and extracting at 40 to 50°C; and separating to obtain an extract solution and concentrating.

3. The composition according to claim 1 or 2, further comprising an auxiliary material which is acceptable in the food field.

4. The composition according to any one of claims 1 to 3, comprising the *Ceratonia siliqua* Linn. fruit extract and honey at a mass ratio of (5 to 120):(50 to 98); preferably (5 to 45):(70 to 98), more preferably (20 to 30):(80 to 90).

5. A method for preparing the composition according to any one of claims 1 to 4, comprising mixing the *Ceratonia siliqua* Linn. fruit extract with honey at room temperature; or further adding an auxiliary material which is acceptable in the food field, and processing into beverages, jams, candies and/or bee products.

6. The composition according to any one of claims 1 to 3, wherein the cactus extract is an aqueous extract; preferably, the aqueous extract is a dry powder; further preferably, the cactus is *Opuntia ficus-indica* (Linn.) Mill.

7. The composition according to any one of claims 1 to 3 and 6, wherein the Noni Puree has a soluble solids content (20°C refractometer method) of 7.0 to 9.0%, a pH of 3.5 to 4.2, and a water content of 90 to 93%.

8. The composition according to any one of claims 1 to 3 and 6 to 7, wherein the mass ratio of the *Ceratonia siliqua* Linn. fruit extract, cactus extract, honey and Noni Puree is (5-120):(10-60):(5-98):(0.8-8); preferably (10-70):(15-50):(10-50):(1-6); further preferably (50-70):(30-50):(10-30):(4-6); more preferably 70:50:10:6.

9. The method for preparing the composition according to any one of claims 1 to 3 and 6 to 8, comprising first mixing the cactus extract with the *Ceratonia siliqua* Linn. fruit extract, then adding honey and Noni Puree, and mixing well; or further adding an auxiliary material which is acceptable in the food field, mixing well; and making into a finished product.

10. Use of the composition according to any one of claims 1 to 3 and 6 to 8 or the composition prepared according to the method of claim 9 in the preparation of a food or a health food having an antioxidative function or an auxiliary effect on reducing blood-glucose or a gastric mucosa protecting function.

11. The composition according to any one of claims 1 to 3, comprising, in parts by weight:
| | |
|---|---|
| *Ceratonia siliqua* Linn. fruit extract | 5 to 120 parts by weight; |
| Honey | 5 to 90 parts by weight; |
| American ginseng extract | 5 to 50 parts by weight; |
| Radix Astragali extract | 5 to 50 parts by weight; |
Preferably, the composition comprises, in parts by weight:
| | |
|---|---|
| *Ceratonia siliqua* Linn. fruit extract | 10 to 60 parts by weight; |
| Honey | 10 to 60 parts by weight; |
| American ginseng extract | 10 to 30 parts by weight; |
| Radix Astragali extract | 10 to 30 parts by weight; |
Further preferably, the composition comprises, in parts by weight:
| | |
|---|---|
| *Ceratonia siliqua* Linn. fruit extract | 10 to 35 parts by weight; |
| Honey | 15 to 60 parts by weight; |
| American ginseng extract | 10 to 20 parts by weight; |
| Radix Astragali extract | 10 to 15 parts by weight. |

12. A composition, comprising, in parts by weight: 10 to 60 parts of *Ceratonia siliqua* Linn. fruit extract, 10 to 60 parts of honey, 10 to 30 parts of American ginseng extract, further comprising 2 to 30 parts of olive extract and/or 10 to 65 parts of grape seed extract;
preferably, the composition comprises, in parts by weight: 10 to 40 parts of *Ceratonia siliqua* Linn. fruit extract, 15 to 60 parts of honey, 10 to 20 parts of American ginseng extract, further comprising 5 to 20 parts of olive extract and/or 20 to 30 parts of grape seed extract.

13. A composition, comprising, in parts by weight: 10 to 60 parts of *Ceratonia siliqua* Linn. fruit extract, 10 to 60 parts of honey, 10 to 30 parts of American ginseng extract, further comprising 2 to 30 parts of cassia seed extract and/or 5 to 25 parts of *Tribulus terrestris* extract;
preferably, the composition comprises, in parts by weight: 10 to 40 parts of *Ceratonia siliqua* Linn. fruit extract, 15 to 60 parts of honey, 10 to 20 parts of American ginseng extract, further comprising 5 to 20 parts of cassia seed extract and/or 5 to 15 parts of *Tribulus terrestris* extract.

14. The composition according to any one of claims 11 to 13, wherein the extracts are all aqueous extracts; preferably, the *Ceratonia siliqua* Linn. fruit extract is the same as the *Ceratonia siliqua* Linn. fruit extract according to claim 2.

15. A method for preparing the composition according to any one of claims 11 to 14, comprising cooling the *Ceratonia siliqua* Linn. fruit extract to room temperature, and mixing with other active ingredients to obtain a finished product; or further adding an auxiliary material which is acceptable in the food field, mixing well; and making into the finished product.

16. Use of the composition according to any one of claims 1 to 3 and 11 to 14 or the composition prepared according to the method of claim 15 in the preparation of a food or a health food having an anti-fatigue function or an immunity enhancing function or an auxiliary effect on reducing blood-glucose or a gastric mucosa protecting function.

17. A *Ceratonia siliqua* Linn. fruit composition, comprising the following ingredients, in parts by weight: 60 to 99 parts of *Ceratonia siliqua* Linn. fruit extract, 1 to 40 parts of cactus extract; preferably, the contents in parts by weight of the *Ceratonia siliqua* Linn. fruit extract and the cactus extract are as follows: 60 to 90 parts of *Ceratonia siliqua* Linn. fruit extract, 10 to 40 parts of cactus extract; further preferably, the weight ratio of the *Ceratonia siliqua* Linn. fruit extract to the cactus extract is 3:1 to 9:1.

18. The composition according to claim 17, wherein the contents in parts by weight of the *Ceratonia siliqua* Linn. fruit extract and the cactus extract are as follows: 75 to 90 parts of *Ceratonia siliqua* Linn. fruit extract, 10 to 25 parts of cactus extract; preferably, the weight ratio of the *Ceratonia siliqua* Linn. fruit fruit extract to the cactus extract is 3:1 to 5:1.

19. The composition according to claim 17 or 18, wherein the *Ceratonia siliqua* Linn. fruit extract and the cactus extract are both aqueous extracts; and the *Ceratonia siliqua* Linn. fruit extract is an aqueous extract of the pericarp of *Ceratonia siliqua* Linn. fruit.

20. The composition according to claim 19, wherein the *Ceratonia siliqua* Linn. fruit extract is prepared by a method comprising the following steps: mixing the dried and pulverized pericarp of *Ceratonia siliqua* Linn. fruit with water, extracting at 40°C to 50°C, centrifuging the obtained extract solution, and concentrating to obtain a *Ceratonia siliqua* Linn. fruit extract.

21. The composition according to claim 19 or 20, wherein the cactus extract is prepared by a method comprising the following steps: peeling the cactus, drying, pulverizing, mixing with water, extracting at 90°C to 95°C, and concentrating the obtained extract solution to obtain a cactus extract.

22. The composition according to any one of claims 17 to 21, wherein the sugar degree of the *Ceratonia siliqua* Linn. fruit extract is 60 to 70 degree, preferably 65 to 70 degree.

23. Use of the composition according to any one of claims 17 to 22 in the preparation of a health food having antioxidative, hypolipidemic, and blood-glucose regulating functions.

24. A health food of *Ceratonia siliqua* Linn. fruit, wherein the health food comprises the composition of any one of claims 17 to 22.

25. A method for preparing the health food according to claim 24, comprising mixing the *Ceratonia siliqua* Linn. fruit extract with a cactus extract; or further adding an auxiliary material which is acceptable in the food field to obtain the health food.

26. A bee feed, comprising an extract of the pericarp of *Ceratonia siliqua* Linn. fruit and a cactus extract;
preferably, the contents in parts by weight of the extract of the pericarp of *Ceratonia siliqua* Linn. fruit and the cactus extract are as follows: 60 to 99 parts of the extract of the pericarp of *Ceratonia siliqua* Linn. fruit, and 1 to 40 parts of the cactus extract;
further preferably, the contents in parts by weight of the extract of the pericarp of *Ceratonia siliqua* Linn. fruit and the cactus extract are as follows: 70 to 99 parts of the pericarp of *Ceratonia siliqua* Linn. fruit, and 1 to 30 parts of the cactus extract; more preferably, the weight ratio of the extract of the pericarp of *Ceratonia siliqua* Linn. fruit to the cactus extract is 15:1 to 4:1.

27. The bee feed according to claim 26, comprising the following ingredients in parts by weight: 80 to 99 parts of the extract of the pericarp of *Ceratonia siliqua* Linn. fruit, and 1 to 20 parts of the cactus extract;
preferably, the weight ratio of the extract of the pericarp of *Ceratonia siliqua* Linn. fruit to the cactus extract is 9:1 to 4:1.

28. The bee feed according to claim 26 or 27, wherein the extract of the pericarp of *Ceratonia siliqua* Linn. fruit and the cactus extract are both aqueous extracts.

29. The bee feed according to claim 28, wherein the sugar degree of the extract of the pericarp of *Ceratonia siliqua* Linn. fruit is 60 to 70 degree, preferably 65 to 70 degree.

30. The bee feed according to claim 28 or 29, wherein the extract of the pericarp of *Ceratonia siliqua* Linn. fruit is prepared by a method comprising the following steps: mixing the dried and pulverized pericarp of *Ceratonia siliqua* Linn. fruit with water, extracting at 40°C to 50°C, centrifuging the obtained extract solution, and concentrating to obtain an extract of the pericarp of *Ceratonia siliqua* Linn. fruit.

31. The bee feed according to any one of claims 28 to 30, wherein the cactus extract is prepared by a method comprising the following steps: drying the cactus, pulverizing and mixing with water, extracting at 90°C to 95°C, and concentrating the resulting extract solution to obtain the cactus extract.

32. A method for preparing the bee feed according to any one of claims 26 to 31, comprising the following steps: uniformly mixing an extract of the pericarp of *Ceratonia siliqua* Linn. fruit and a cactus extract to obtain the bee feed; or uniformly mixing an extract of the pericarp of *Ceratonia siliqua* Linn. fruit and a cactus extract, and adding an additive which is acceptable in the feed field to obtain the bee feed.
